# EUROPEAN PATENT APPLICATION

(11) **EP 4 808 245 A1**
(43) Date of publication of application: **16.09.2026**
(21) Application number: 24921030.3
(22) Date of filing: 02.02.2024
(51) Int. Cl.: H04W 72/21

(54) **WIRELESS COMMUNICATION METHOD, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN); WU, Zuomin, Dongguan, Guangdong 523860 (CN)
(74) Representative: Taor, Simon Edward William
(86) International application number: PCT/CN2024/075593
(87) International publication number: WO 2025/160976

(57) **Abstract**

The present application provides a wireless communication method, a device, and a storage medium. The method comprises: a terminal device transmits a physical uplink shared channel (PUSCH), wherein the PUSCH is scrambled using a radio network temporary identifier (RNTI), the PUSCH is used for carrying a message 3, the transmission of the message 3 does not require a message 1 and/or a message 2, and the RNTI is determined on the basis of a transmission resource of hybrid automatic repeat request (HARQ) new transmission or HARQ retransmission of the message 3 or is indicated by a network device.

## Description

### TECHNICAL FIELD

Embodiments of the present disclosure relate to the technical field of mobile communications, and in particular to a method and device for wireless communication, and a storage medium.

### BACKGROUND

Random access is a basic and important procedure in a communication system. The purposes of random access may include: establishing uplink synchronization, establishing a unique terminal identifier (i.e., a cell radio network temporary identifier, C-RNTI), and requesting an network to allocate uplink resources to a terminal. Therefore, random access can be used not only for initial access, but also for new cell access during handover, access after radio link failure, resuming uplink synchronization when there is uplink/downlink data transmission, etc.

### SUMMARY

Embodiments of the present disclosure provide a method and device for wireless communication, and a storage medium.

The method for wireless communication provided by an embodiment of the present disclosure includes that:
a terminal device transmits a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource for hybrid automatic repeat-request (HARQ) new transmission or HARQ retransmission of the Msg3, or is indicated by a network device.

The method for wireless communication provided by an embodiment of the present disclosure includes that:
the network device receives a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource for HARQ new transmission or HARQ retransmission of the Msg3, or is indicated by the network device.

A terminal device provided by an embodiment of the present disclosure includes:
a first communication unit, configured to transmit a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource for HARQ new transmission or HARQ retransmission of the Msg3, or is indicated by a network device.

A network device provided by an embodiment of the present disclosure includes:
a second communication unit, configured to receive a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource for HARQ new transmission or HARQ retransmission of the Msg3, or is indicated by the network device.

A communication device provided by an embodiment of the present disclosure may be a terminal device in the above solution or a network device in the above solution, and the communication device includes a processor and a memory. The memory is used for storing a computer program, and the processor is used for invoking and running the computer program stored in the memory to execute the above-described wireless communication method.

A chip provided by an embodiment of the present disclosure is used for realizing the above-described wireless communication method.

Specifically, the chip includes a processor for invoking and executing a computer program from a memory to cause a device in which the chip is mounted to execute the above-described wireless communication method.

A computer-readable storage medium provided by an embodiment of the present disclosure is used for storing a computer program that causes a computer to execute the above-described wireless communication method.

A computer program product provided by an embodiment of the present disclosure includes computer program instructions that cause a computer to execute the above-described wireless communication method.

A computer program provided by an embodiment of the present disclosure causes a computer to execute the above-described wireless communication method when it is executed on the computer.

Through the above technical solutions, the Msg3 transmitted by the terminal device does not need to pass through the process of the Msg1 and/or the Msg2, so that the Msg3 is directly transmitted, and an RNTI used by a PUSCH carrying the Msg3, that is, a PUSCH that does not need the random access channel (RACH-less) EDT, is determined based on a transmission resource for the HARQ new transmission or HARQ retransmission of the Msg3 or is indicated by the network device, thereby reducing the uplink and downlink signaling overhead, improving the uplink capacity of the system, and effectively avoiding the problem of RNTI ambiguity during scrambling the PUSCH of the RACH-less EDT.

### BRIEF DESCRIPTION OF THE DRAWINGS

The accompanying drawings described herein are used to provide a further understanding of the present disclosure and constitute a part of the present disclosure. The schematic embodiments of the present disclosure and the description thereof are used to explain the present disclosure and do not constitute an improper limitation to the present disclosure. In the drawings:
FIG. 1 is a schematic diagram of an application scenario according to an embodiment of the present disclosure;
FIG. 2 is an optional flowchart of four-step random access provided by an embodiment of the present disclosure;
FIG. 3 is an optional flowchart of two-step random access provided by an embodiment of the present disclosure;
FIG. 4 is an optional flowchart of early data transmission provided by an embodiment of the present disclosure;
FIG. 5 is an optional flowchart of a wireless communication method provided by an embodiment of the present disclosure;
FIG. 6 is an optional flowchart of a wireless communication method provided by an embodiment of the present disclosure;
FIG. 7 is an optional flowchart of a wireless communication method provided by an embodiment of the present disclosure;
FIG. 8 is an optional flowchart of a wireless communication method provided by an embodiment of the present disclosure;
FIG. 9 is an optional flowchart of a wireless communication method provided by an embodiment of the present disclosure;
FIG. 10 is an optional flowchart of a wireless communication method provided by an embodiment of the present disclosure;
FIG. 11 is an optional flowchart of a wireless communication method provided by an embodiment of the present disclosure;
FIG. 12 is an optional structural schematic diagram of a terminal device provided by an embodiment of the present disclosure;
FIG. 13 is an optional structural schematic diagram of a network device provided by an embodiment of the present disclosure;
FIG. 14 is a schematic structural diagram of a communication device provided by an embodiment of the present disclosure;
FIG. 15 is a schematic structural diagram of a chip according to an embodiment of the present disclosure; and
FIG. 16 is a schematic block diagram of a communication system provided by an embodiment of the present disclosure.

### DETAILED DESCRIPTION

The technical solutions in the embodiments of the present disclosure will be described below with reference to the accompanying drawings in the embodiments of the present disclosure. It is obvious that the described embodiments are some embodiments of the present disclosure, but not all embodiments. Based on the embodiments in the present disclosure, all other embodiments obtained by those of ordinary skill in the art without making creative efforts fall within the scope of protection of the present disclosure.

Communication system scenarios include a terrestrial network (TN) and an NTN. Among them, the NTN generally uses satellite communication to provide communication services to terrestrial users. NTN systems currently include a NR-NTN system and an IoT-NTN system, and other NTN systems may be included in the future.

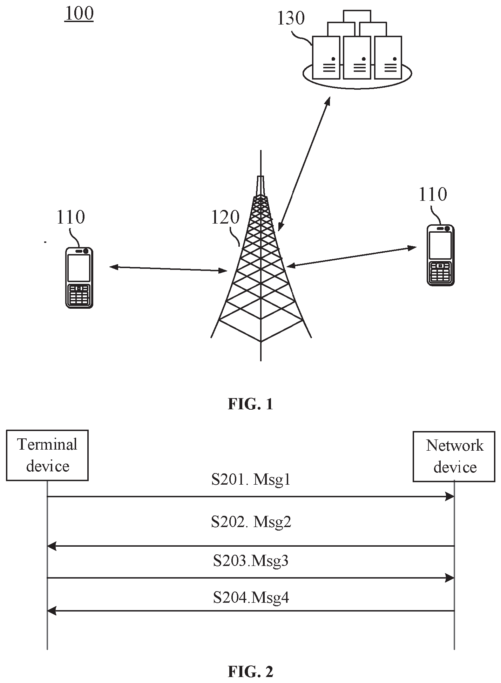

FIG. 1 is a schematic diagram of an architecture of a communication system provided by an embodiment of the present disclosure. As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrative of the communication system 100, but the embodiments of the present disclosure are not limited thereto. That is, the technical solutions of the embodiments of the present disclosure can be applied to various communication systems, for example, a long-term evolution (LTE) system, an LTE time division duplex (TDD) system, a universal mobile telecommunication system (UMTS), an Internet of things (IoT) system, a narrow band Internet of things (NB-IoT) system, an enhanced machine-type communication (eMTC) system, a 5G communication system (also known as new radio (NR) communication system), or a future communication system, etc.

In the communication system 100 illustrated in FIG. 1, the network device 120 may be an access network device that communicates with the terminal device 110. The access network device may provide communication coverage for a particular geographic area and may communicate with a terminal device 110 (e.g., a UE) located within the coverage area.

The network device 120 may be an evolutional Node B (i.e., eNB or eNodeB) in a long term evolution (LTE) system, or a next generation radio access network (NG RAN) device, or a base station (gNB) in an NR system, or a wireless controller in a cloud radio access network (CRAN); or, the network device 120 may be a relay station, an access point, an in-vehicle device, a wearable device, a hub, a switch, a bridge, a router, or a network device in a future-evolving public land mobile network (PLMN).

The terminal device 110 may be any terminal device including, but is not limited to, a terminal device that is connected with the network device 120 or other terminal devices via a wired or wireless connection.

For example, the terminal device 110 may refer to an access terminal, a user equipment (UE), a user unit, a user station, a mobile station, a mobile platform, a remote station, a remote terminal, a mobile device, a user terminal, a terminal, a wireless communication device, a user agent, or a user device. The access terminal may be a cellular telephone, a cordless telephone, a session initiation protocol (SIP) telephone, an IoT device, a satellite handheld terminal, a wireless local loop (WLL) station, a personal digital assistant (PDA), a handheld device with wireless communication capabilities, a computing device or another processing device connected to a wireless modem, an in-vehicle device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with a base station, and the core network device 130 may be a 5G core network (5G core, 5GC) device, for example, an access and mobility management function (AMF), an authentication server function (AUSF), a user plane function (UPF), a session management function (SMF), or the like. Alternatively, the core network device 130 may also be an evolved packet core (EPC) device in the LTE network, for example, a session management function + core packet gateway (SMF + PGW-C) device in the core network. It should be understood that SMF + PGW-C can simultaneously implement the functions that SMF and PGW-C can implement. During network evolution, the above-mentioned core network devices may be called by other names, or new network entities may be formed by dividing the functions of the core network, which is not limited by the embodiments of the present disclosure.

The various functional units in the communication system 100 may also establish connections and communicate with each other through next generation (NG) interfaces.

For example, the terminal device establishes an air interface connection with an access network device through an Uu interface for transmitting user plane data and control plane signaling; the terminal device can establish a control plane signaling connection with the AMF through a NG interface 1 (N1 for short); the access network device, such as a next generation radio access base station (gNB), can establish a user plane data connection with the UPF through a NG interface 3 (N3 for short); the access network device can establish a control plane signaling connection with the AMF through a NG interface 2 (N2 for short); the UPF can establish a control plane signaling connection with the SMF through a NG interface 4 (N4 for short); the UPF can interact user plane data with a data network through a NG interface 6 (N6 for short); the AMF may establish a control plane signaling connection with the SMF through a NG interface 11 (N11 for short); and the SMF may establish a control plane signaling connection with the PCF through a NG interface 7 (N7 for short).

FIG. 1 illustrates exemplarily one base station, one core network device, and two terminal devices. Optionally, the wireless communication system 100 may include multiple base station devices and another number of terminal devices may be included within the coverage area of each base station, which is not limited in the embodiments of the present disclosure.

It should be noted that FIG. 1 is only an example illustrating a system to which the present disclosure is applicable, and of course, the method illustrated in the embodiment of the present disclosure may be applicable to other systems. Furthermore, the terms "system" and "network" are often used interchangeably herein. The term "and/or" herein is merely a description of an association between related objects, and indicates that there may be three relationships, for example, A and/or B, which may indicate that A exists alone, A and B exists simultaneously, and B exists alone. In addition, the character "/" herein generally indicates that the associated objects before and after are in an "or" relationship. It should also be understood that the "indication" referred to in the embodiments of the present disclosure may be a direct indication, an indirect indication, or an indication that there is an association. For example, A indicates B, which may mean that A directly indicates B, e.g., B may be acquired by A; or it may also be indicated that A indirectly indicates B, for example, A indicates C, and B can be acquired by C; or it can also be indicated that there is an association between A and B. It should also be understood that the "correspondence" mentioned in the embodiment of the present disclosure may mean that there is a direct correspondence or an indirect correspondence between the two, or may mean that there is an association between the two, or may be a relationship between indication and being indicated, configuration and being configured, or the like. It should also be understood that the "predefined" or "predefined rules" mentioned in the embodiments of the present disclosure can be realized by storing corresponding codes, tables, or other means that can be used to indicate relevant information in advance in devices (for example, including terminal devices and network devices), and the specific implementations thereof are not limited in the present disclosure. For example, "predefined" may refer to defined in a protocol. It should also be understood that in the embodiment of the present disclosure, the "protocol" may refer to a standard protocol in the field of communications, and may include, for example, an LTE protocol, an NR protocol, and related protocols applied to future communication systems, and the present disclosure is not limited thereto.

In order to facilitate understanding of the technical solutions in the embodiments of the present disclosure, the related technologies of the embodiments of the present disclosure will be described below. The following related technologies are optional solutions and can be arbitrarily combined with the technical solutions in the embodiments of the present disclosure, and all of them fall within the protection scope of the embodiments of the present disclosure.

### LTE random access procedure

In an LTE system, the random access procedure may be triggered by the following events:
establishing a radio connection during UE initial access: the UE transitions from a radio resource control (RRC) idle state (i.e., RRC_IDLE state) to a connected state (i.e., RRC_CONNECTED state); where in the RRC_IDLE state, no RRC connection is established, while in the RRC_CONNECTED state, an RRC connection is established;
a RRC connection re-establishment procedure: the UE can reestablish a radio connection after a radio link failure;
a handover: the UE needs to establish uplink synchronization with a new cell;
in the RRC_CONNECTED state, the downlink (DL) data arrives, and the uplink (UL) is in an out-of-sync state (i.e., a non-synchronized state);
in the RRC_CONNECTED state, UL data arrives, and at this time, the UL is in an out-of-sync state (i.e., a non-synchronized state) or has no physical uplink control channel (PUCCH) resource for sending a scheduling request (SR);
SR fails;
synchronous reconfiguration request from the RRC.

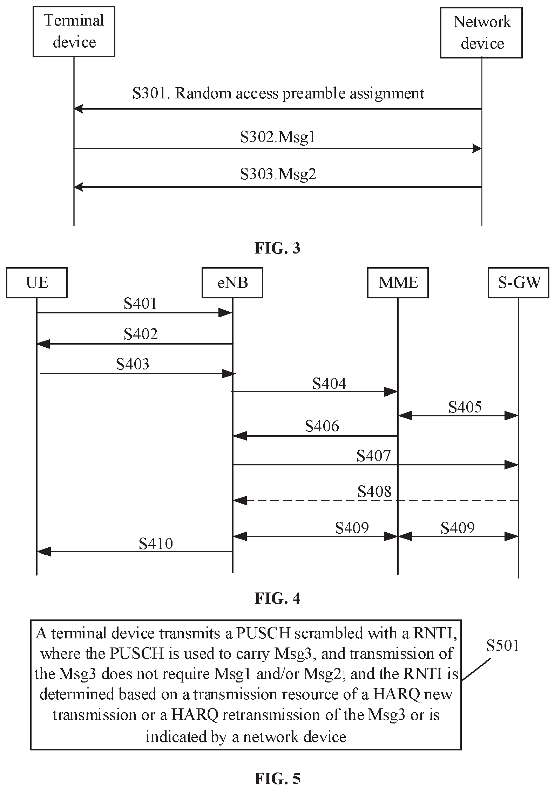

In the related art, two random access schemes are supported: a contention-based random access scheme shown in FIG. 2 and a non-contention-based (or contention-free based) random access scheme shown in FIG. 3.

As shown in FIG. 2, the contention-based random access procedure includes the following four steps:
In S201, a terminal device transmits a random access preamble to a network device through a message 1 (i.e., an Msg1).

The terminal device selects a physical random access channel (PRACH) resource, and transmits a selected preamble on the selected PRACH resource. Based on the preamble, the base station can estimate uplink timing and a size of an uplink grant required for the terminal device to transmit Msg3.

In S202, the network device transmits a message 2 (i.e., an Msg2) to the terminal device.

After the network device detects that a terminal device has sent a preamble, the network device sends a random access response (RAR) to the terminal device through the Msg 2 to inform the terminal device of uplink resource information that can be used when sending Msg3, assigns a temporary radio network temporary identity (RNTI) to the terminal device, and provides a time advance command to the terminal device.

After sending the Msg1, the terminal device starts a RAR time window (i.e., ra-ResponseWindow), and monitors a physical downlink control channel (PDCCH) scrambled with a random access RNTI (i.e., an RA-RNTI) within the RAR time window. In LTE, the calculation formula of RA-RNTI is shown in the following formula (1):
$RA _ RNTI = 1 + t _ id + 10 * f _ id$

Where *t _id* is a first subframe index of PRACH transmission (0 ≤ *t _id* < 10); *f _id* is a frequency-domain index ( 0 ≤ *f _id <* 6 ) corresponding to the PRACH in the subframe; PRACH resources are sequentially numbered in order from low to high in the frequency domain.

For a eMTC UE, calculation of RA-RNTI is shown in the following formula (2): $RA _ RNTI = 1 + t _ id + 10 * f _ id + 60 * \left(SFN_id mod \left(Wmax/10\right)\right)$

Where *t _id* is a first subframe index of PRACH transmission (0 ≤ *t _id* < 10 ); *f _id* is a frequency-domain index ( 0 ≤ *f _id <* 6 ) corresponding to the PRACH in the subframe; PRACH resources are sequentially numbered in order from low to high in the frequency domain. *SFN _id* is a first system frame number (SFN) index of PRACH transmission, Wmax is a maximum RAR window length that eMTC can support, and its value is 400 subframes.

For a NB-IoT UE, the calculation of RA-RNTI is shown in the following formula (3):
$RA _ RNTI = 1 + floor \left(SFN_id/4\right) + 256 * carrier _ id$

Where *SFN _id* is a first SFN index of PRACH transmission, *carrier _id* is a UL carrier index corresponding to the PRACH transmission, and a carrier identifier (i.e., carrier_id) corresponding to an anchor carrier is 0.

For a NB-IoT UE in TDD mode, the calculation of RA-RNTI is shown in the following formula (4):
$RA _ RNTI = 1 + floor \left(SFN_id/4\right) + 256 * \left(H_SFN mod 2\right)$

Where *SFN _id* is a first SFN index of PRACH transmission, and *H _SFN* is a first hyperframe system frame number (H-SFN) of the PRACH transmission.

As can be seen from the above calculation formulas of the RA-RNTI, the RA-RNTI is related to a PRACH time-frequency resource used by the UE to transmit the Msg1.

After the terminal device successfully receives the PDCCH scrambled with RA-RNTI, the terminal device can obtain a physical downlink shared channel (PDSCH) scheduled by the PDCCH. The PDCCH includes a RAR, and the RAR specifically includes the following information: a subheader, a RAPID, a payload, an uplink (UL) grant, and a temporary cell RNTI (C-RNTI). The subheader of the RAR contains BI, BI being used to indicate a backoff time for Msg1 retransmission; the RAPID in the RAR is a preamble index received and responded by the network; the payload of the RAR contains TAG, which is used to adjust the uplink timing; the UL grant is used to schedule an uplink resource indication of Msg3; and temporary C-RNTI is used to scramble a PDCCH for Msg4 (initial access).

If the terminal device receives a PDCCH scrambled with the RAR-RNTI, and the RAR contains the preamble index transmitted by itself, the terminal device considers that the random access response has been successfully received.

In S203, the terminal device transmits the Msg3 in the uplink resource specified by the RAR message.

The Msg3 is mainly used to inform the network device of what event triggered the RACH procedure. For example, if it is an initial random access event, an identifier (ID) of the terminal device and an establishment cause are carried in the Msg3; if it is an RRC reestablishment event, the ID of the terminal device in the connected state and the establishment cause are carried in the Msg3.

Meanwhile, the ID carried in the Msg3 may cause a contention conflict to be resolved in S204.

In S204, the network device transmits an Msg 4 to the terminal device.

The Msg4 includes a contention resolution message and allocates uplink transmission resources to the terminal device.

The Msg4 has two functions, one is for contention conflict resolution, and the other is for the network device to transmit RRC configuration message to the terminal device. There are two ways to resolve the contention conflict: one is that if the UE carries the C-RNTI in the Msg3, the Msg4 scrambles the PDCCH carrying the Msg4 with the C-RNTI. Another is to scramble the PDCCH with a temporary C-RNTI (TC-RNTI) if the UE does not carry C-RNTI in Msg3, such as during initial access. The conflict resolution is that the UE receives the PDSCH of Msg4 and matches a service data unit (SDU) of a common control channel (CCCH) in the PDSCH.

When receiving the Msg4 from the network device, the terminal device will detect whether the terminal device-specific temporary identifier (i.e., TC-RNTI or C-RNTI) sent by the terminal device in the Msg3 is included in the contention resolution message sent by the base station; if it is included, it indicates that the random access procedure of the terminal device is successful; otherwise, it is considered that the random access procedure has failed, and the terminal device needs to start the random access procedure again from the first step.

As illustrated in FIG. 3, the non-contention-based random access procedure includes the following three steps:
In S301, a network device transmits an assigned random access preamble to a terminal device.
In S302, the terminal device transmits a random access preamble to the network device through an Msg1.

Based on non-contention-based random access, PRACH time-domain resources and preamble may be specified by the network device.

In S303: the network device transmits an Msg2 to the terminal device.

After the network device detects that the terminal device has transmitted the preamble, the network device transmits a RAR to the terminal device via the Msg 2.

After transmitting the Msg1, the terminal device starts a random access response time window and monitors a PDCCH scrambled with RA-RNTI within the random access response time window, and the description of the random access response can be referred to that in S202.

For non-contention-based random access, the random access procedure ends after the terminal device successfully receives the Msg 2.

### Early data transmission (EDT)

If the UE in the RRC_IDLE state has uplink data to transmit, the UE needs to initiate an RRC connection establishment through a random access procedure first, and can transmit data to the network only after establishing RRC connection with the network device. In order to reduce signaling interaction between the UE and the network caused by data transmission and save terminal power consumption, the 3rd Generation Partnership Project (3GPP) introduced EDT mechanism for NB-IoT and eMTC, such that the UE in the RRC_IDLE state can transmit UL data through Msg3 during random access. After receiving the successful reception response from the base station, the random access procedure is terminated, and the UE continues to remain in the RRC_IDLE state without entering the RRC connected state. The base station configures a separate NPRACH resource for the EDT, and when an amount of UL data to be transmitted by the UE does not exceed an upper limit of data amount configured by the network, the UE may transmit the Msg1 on the separate NPRACH resource for the EDT, thereby requesting a Msg3 grant for the EDT from the base station.

Taking a user plane transmission scheme as an example, the flow of EDT is shown in FIG. 4, and includes the following operations.

In S401, a UE transmits a random access preamble to a base station.

In S402, the base station transmits a random access response to the UE.

In S403, the UE transmits an RRC connection resume request and uplink data to the base station.

Here, the RRC connection resume request carries the following information: a resume ID, a resume cause, and a short resume mac-i (i.e., shortresumemac-i) which may be reused as an authentication token of the RRC connection resume request message and/or the RRC resume request message.

In S404, the base station transmits a UE context resume request to a MME.

In S405, a modify bearer is executed between the MME and an S-GW.

In S406, the MME transmits a UE context resume response to the base station.

In S407, the base station transmits the uplink data to the MME.

In S408, the MME transmits downlink data to the base station.

In S409, a modify bearer is executed between the MME and the S-GW, and a S1 suspend procedure is executed between the MME and the base station.

In S410, the base station transmits an RRC connection resume response and the downlink data to the UE.

The RRC connection resume response carries the following information: a release cause, a resume ID, and nexthopchainingcounter (NCC).

In FIG. 4, S401, S402, S403, and S410 can be understood as Msg 1, Msg 2, Msg 3, and Msg 4, respectively.

### Preconfigured uplink resources (PUR)

In order to further reduce signaling overhead and terminal power consumption on the basis of EDT, 3GPP introduces PUR feature for NB-IoT and eMTC. The PUR feature allows the base station to configure the PUR for the UE while releasing the UE to the RRC_IDLE state, so that the UE can use the PUR for uplink transmission in the RRC_IDLE state without initiating a random access procedure. When configuring a PUR for a UE, the network can also configure a demodulation reference signal (DMRS) cyclic shift at the same time, so that at most two UEs can share the same PUSCH resource (in this case, different UEs can be distinguished by DMRSs). By skipping the random access procedure, the uplink transmission efficiency can be further improved and the terminal energy consumption can be further reduced.

Before performing PUR transmission, the UE needs to verify a validity of timing advance (TA), and the determination of TA validity is based on one or more of the following conditions:
a) whether a serving cell is changed;
b) whether a timing advance timer (TAT) has expired; or,
c) a change in reference signal received power (RSRP) of the terminal device.

In the related art, in order to reduce uplink and downlink signaling overhead and improve the uplink capacity of the system, it is planned to further enhance EDT characteristics in R19 IoT NTN, for example, to introduce PRACH-less EDT, that is, direct transmission of Msg3, that is, transmitting Msg3 directly without Msg1/Msg2.

In EDT, the base station allocates PUSCH resources for Msg3 initial transmission to the UE through Msg2, and at the same time, a TC-RNTI is indicated in Msg2 for scrambling of a PUSCH of Msg3, scrambling of a PDCCH indicating retransmission of Msg3 or reception of Msg4, and scrambling of a PDSCH of Msg4. For PRACH-less EDT, the UE skips Msg1 and Msg2 to directly transmit Msg3, and there will be contention for Msg3 resources, but how the terminal device determines the TC-RNTI in the PRACH-less EDT procedure is a problem that needs to be solved.

In order to facilitate understanding of the technical solutions of the embodiments of the present disclosure, the technical solutions of the present disclosure are described in detail below through specific embodiments. The above related technologies can be arbitrarily combined with the technical solutions of the embodiments of the present disclosure as optional solutions, and all of them fall within the protection scope of the embodiments of the present disclosure. Embodiments of the present disclosure include at least some of the following.

An embodiment of the present disclosure provides a wireless communication method, which is applied to a terminal device, as shown in FIG. 5, the method includes the following operation.

In S501, the terminal device transmits a PUSCH scrambled with a RNTI, where the PUSCH is used to carry Msg3, and transmission of the Msg3 does not require Msg1 and/or Msg2; and the RNTI is determined based on a transmission resource for HARQ new transmission or HARQ retransmission of the Msg3 or is indicated by a network device.

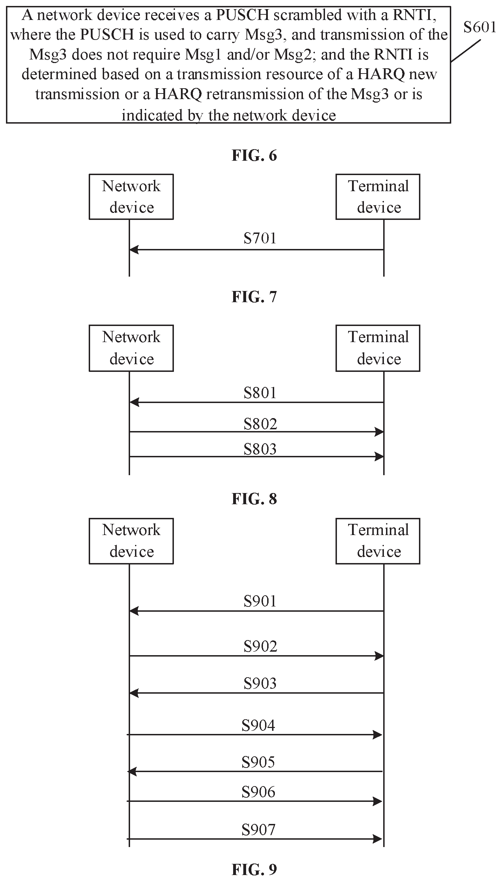

An embodiment of the present disclosure provides a wireless communication method, which is applied to a network device, as shown in FIG. 6, the method includes the following operation.

In S601, the network device receives a PUSCH scrambled with a RNTI, where the PUSCH is used to carry Msg3, and transmission of the Msg3 does not require Msg1 and/or Msg2; and the RNTI is determined based on a transmission resource for HARQ new transmission or HARQ retransmission of the Msg3 or is indicated by the network device.

An embodiment of the present disclosure provides a wireless communication method, which is applied to a communication system including a terminal device and a network device, as shown in FIG. 7, the method includes the following operation.

In S701, the terminal device transmits a PUSCH to the network device, where the PUSCH is scrambled with a RNTI and is used for carrying Msg3, and transmission of the Msg3 does not require the Msg1 and/or Msg2; and the RNTI is determined based on a transmission resource for HARQ new transmission or HARQ retransmission of the Msg3 or is indicated by the network device.

The wireless communication method illustrated in FIG. 5, FIG. 6, or FIG. 7 will be described below.

The terminal device in a non-connected state skips Msg1 and/or Msg2 and directly sends Msg3 to the network device, the Msg3 here can be understood as Msg3 that does not require Msg1 and/or Msg2 or Msg3 that does not require PRACH. The network device receives the Msg3 transmitted by the terminal device without interacting with the Msg1 and/or Msg2 with the terminal device.

For convenience of description, Msg3 hereinafter may be understood as Msg3 that does not require Msg1 and/or Msg2.

Optionally, Msg3 contains uplink data and/or an RRC message.

The RRC message includes at least one of the following:
a RRC early data transmission request (i.e., RRCEarlyDataRequest);
a RRC connection establishment request (i.e., RRCConnectionRequest); or,
a RRC connection resume request (i.e., RRCConnectionResumeRequest).

In the embodiment of the present disclosure, the transmitted Msg3 may be an initial transmission of the Msg3, that is, a HARQ new transmission of the Msg3, or may be a retransmission of the Msg3, that is, a HARQ retransmission of the Msg3.

A PUSCH carrying the Msg3 is scrambled with a RNTI. The RNTI is determined in one of the following ways:
determination method 1: determining the RNTI based on a transmission resource for HARQ new transmission of Msg3;
determination method 2: determining the RNTI based on a transmission resource for HARQ retransmission of Msg3; or,
determination method 3: the RNTI is indicated by the network device.

A PUSCH carrying the HARQ new transmission of Msg3 may be referred to as a first PUSCH, and a RNTI used for scrambling the first PUSCH may be determined according to the above determination method 1 or 3.

A PUSCH carrying the HARQ retransmission of the Msg3 may be referred to as a second PUSCH, and a RNTI used for scrambling the second PUSCH may be determined according to one of the above determination method 1, 2 or 3.

In the embodiment of the present disclosure, the HARQ new transmission of the Msg3 and the HARQ retransmission of the Msg3 use the same or different RNTIs, and/or HARQ retransmissions of different messages 3 use the same or different RNTIs.

In the embodiment of the present disclosure, the Msg3 sent by the terminal device or received by the network device does not need to go through the procedure of the Msg1 and/or Msg2, so that the Msg3 can be transmitted directly. A RNTI used by a PUSCH carrying the Msg3, that is, a PUSCH that does not need a random access channel EDT (i.e., a RACH-less EDT PUSCH), is determined based on the transmission resource for HARQ new transmission or HARQ retransmission of the Msg3 or is indicated by the network device, thereby reducing the uplink and downlink signaling overhead, improving the uplink capacity of the system, and effectively avoiding the problem of RNTI ambiguity during scrambling the RACH-less EDT PUSCH.

In some embodiments, if the PUSCH is a first PUSCH, the first PUSCH is a HARQ new transmission of the Msg3, the RNTI is a first RNTI, and the first RNTI is determined based on a first parameter of the first PUSCH, the first parameter of the first PUSCH including a transmission resource for the first PUSCH.

The first PUSCH is a HARQ new transmission of the Msg3, which can be understood that the first PUSCH is used to carry the HARQ new transmission of the Msg3.

The first PUSCH transmitted by the terminal device is scrambled with the first RNTI, and the first PUSCH received by the network device is scrambled with the first RNTI.

The first RNTI is determined based on a first parameter of the first PUSCH, where the first parameter of the first PUSCH includes a transmission resource for the first PUSCH.

The transmission resource for the first PUSCH may be understood as the transmission resource for the HARQ new transmission of the Msg3, that is, the first RNTI is an RNTI determined using the transmission resource for the HARQ new transmission of the Msg3.

In some embodiments, if the PUSCH is a second PUSCH, the second PUSCH is a HARQ retransmission of the Msg3, the RNTI is a first RNTI, the first RNTI is determined based on a first parameter of the first PUSCH, the first parameter of the first PUSCH includes a transmission resource for the first PUSCH, and the first PUSCH is a HARQ new transmission of the Msg3.

The second PUSCH is a HARQ retransmission of the Msg3, which can be understood that the second PUSCH is used to carry a HARQ retransmission of the Msg3.

The second PUSCH transmitted by the terminal device is scrambled with the first RNTI, and the second PUSCH received by the network device is scrambled with the first RNTI.

If the first PUSCH is scrambled with the first RNTI and the second PUSCH is scrambled with the first RNTI, that is, both the HARQ new transmission of the Msg3 and the HARQ retransmission of the Msg3 are scrambled with the first RNTI, and at this time, the first RNTI is used for scrambling the PUSCH (including the HARQ new transmission of the Msg3 and the HARQ retransmission of the Msg3).

In an example, a number of transmissions of the Msg3 is 3, and three PUSCHs (one HARQ new transmission of the Msg3 and two HARQ retransmissions of the Msg3) are all scrambled with an RNTI determined based on the transmission resource for the HARQ new transmission of the Msg3.

In the embodiment of the present disclosure, the HARQ new transmission of the Msg3 and the HARQ retransmission of the Msg3 are scrambled with the same first RNTI, and for the HARQ retransmission of the Msg3, it is not necessary to recalculate a RNTI, thus simplifying the determination process of the RNTI.

In some embodiments, if the PUSCH is a second PUSCH, the second PUSCH is a HARQ retransmission of the Msg3, the RNTI is a second RNTI, and the second RNTI is determined based on a first parameter of the second PUSCH, and the first parameter of the second PUSCH includes a transmission resource for the second PUSCH.

The second PUSCH transmitted by the terminal device is scrambled with the second RNTI, and the second PUSCH received by the network device is scrambled with the second RNTI.

The second RNTI is determined based on a first parameter of the second PUSCH, the first parameter of the second PUSCH including a transmission resource for the second PUSCH.

The transmission resource for the second PUSCH may be understood as the transmission resource for the HARQ retransmission of the Msg3, that is, the second RNTI is an RNTI determined based on the transmission resource for the HARQ retransmission of the Msg3.

Second RNTIs used for different second PUSCHs are RNTIs determined based on first parameters of the different second PUSCHs, respectively.

When the first PUSCH is scrambled with the first RNTI and the second PUSCH is scrambled with the second RNTI, the HARQ new transmission of the Msg3 and the HARQ retransmission of the Msg3 are scrambled with different RNTIs, and HARQ of the Msg3 at different times is scrambled with different RNTIs, at this time, for each PUSCH transmitted, the terminal device determines the RNTI based on the transmission resource for the PUSCH transmitted this time, and scrambles the PUSCH transmitted this time with the determined RNTI.

In an example, the number of transmissions of the Msg3 is 3, the three PUSCH transmissions including one HARQ new transmission of the Msg3 and two HARQ retransmissions of the Msg3. The first PUSCH transmission is scrambled with an RNTI determined based on the transmission resource for the first PUSCH transmission, the second PUSCH transmission is scrambled with an RNTI determined based on the transmission resource for the second PUSCH transmission, and the third PUSCH transmission is scrambled with an RNTI determined based on the transmission resource for the third PUSCH transmission. The first PUSCH transmission may be understood as the first PUSCH, and the second PUSCH transmission and the third PUSCH transmission may be understood as different second PUSCHs.

In the embodiment of the present disclosure, the HARQ new transmission of the Msg3 and the HARQ retransmission of the Msg3 are scrambled with different RNTIs, which can reduce the consumption of RNTI space.

In some embodiments, if the PUSCH is a second PUSCH, the second PUSCH is a HARQ retransmission of the Msg3, the RNTI is a third RNTI, and the third RNTI is an RNTI indicated by the network device.

The second PUSCH transmitted by the terminal device is scrambled with the third RNTI, and the second PUSCH received by the network device is scrambled with the third RNTI.

The third RNTI is an RNTI indicated by the network device to the terminal device.

Optionally, third RNTIs used for scrambling are the same or different for different second PUSCHs.

In an example, different second PUSCHs use the same third RNTI, and at this time, the network device indicates the RNTI only once for the different second PUSCHs.

In an example, different second PUSCHs use different third RNTIs, and in this case, the network device indicates one RNTI for a single second PUSCH transmission.

When the third RNTIs used for scrambling different second PUSCHs are the same, that is, the different second PUSCHs use the same (third) RNTI, the third RNTI can be understood as an RNTI allocated by the network device to the terminal device.

When the first PUSCH is scrambled with the first RNTI, the second PUSCH is scrambled with the third RNTI, and different second PUSCHs use the same third RNTI, the HARQ new transmission of the Msg3 and the HARQ retransmission of the Msg3 are scrambled with different RNTIs, and different HARQ retransmissions of the Msg3 are scrambled with the same RNTI. For the first PUSCH, the terminal device determines an RNTI based on a transmission resource for the first PUSCH, and scrambles the first PUSCH using the determined RNTI; for the second PUSCH of each transmission, the terminal device scrambles the second PUSCH of the current transmission using the RNTI indicated by the network device.

In an example, the number of transmissions of Msg3 is 3, the three PUSCHs include one HARQ new transmission of the Msg3 and two HARQ retransmissions of the Msg3, the PUSCH of the first transmission is scrambled with the RNTI determined based on the transmission resource for the PUSCH of the first transmission, and the PUSCH of the second transmission and the PUSCH of the third transmission are scrambled with the RNTI indicated by the network device.

In the embodiment of the present disclosure, the HARQ new transmission of the Msg3 and the HARQ retransmission of the Msg3 are scrambled with different RNTIs, which can reduce the consumption of RNTI space.

In some embodiments, the third RNTI is indicated through a first physical downlink control channel (PDCCH), where the first PDCCH is used to respond to HARQ new transmission of the Msg3 and to indicate HARQ retransmission scheduling for the Msg3.

The terminal device transmits the first PUSCH to the network device, and the network device receives the first PUSCH, and transmits the first PDCCH to the terminal device in response to the first PUSCH. The first PDCCH may be understood as being used to respond to the first PUSCH or a HARQ new transmission of Msg3. The first PDCCH indicates the HARQ retransmission scheduling for the Msg3, and the first PDCCH indicates the third RNTI.

It can be understood that if the first PDCCH does not indicate the HARQ retransmission scheduling for the Msg3, at this time, the HARQ retransmission of the Msg3 does not need to be performed, then the first PDCCH may not indicate the RNTI.

In some embodiments, the manner in which the network device indicates the third RNTI includes:
Manner 1: the network device indicates an absolute value of the third RNTI; or,
Manner 2: the network device indicates a first identifier, and an RNTI corresponding to the first identifier in an RNTI list is the third RNTI.

In the manner 1, the network device may directly transmit the absolute value of the third RNTI to the terminal device.

In the manner 2, the network device transmits the first identifier to the terminal device, and the terminal device searches an RNTI corresponding to the first identifier from the RNTI list as the third RNTI.

The RNTI list includes multiple RNTIs, and different RNTIs may correspond to different identifiers. Optionally, an identifier is an index of each RNTI in the RNTI list.

In some embodiments, the RNTI list is configured by the network device via a broadcast message.

The network device configures the RNTI list to the terminal device via broadcast.

In the embodiment of the present disclosure, the RNTI list may be at a cell level, a coverage enhancement (CE) level, or a semi-persistent scheduling (SPS) resource configuration level.

In some embodiments, if the network device indicates the third RNTI, the HARQ retransmission of the Msg3 is scrambled with the third RNTI.

If the network device does not indicate the third RNTI, the HARQ retransmission of the Msg3 is scrambled with a second RNTI determined based on a first parameter of a second PUSCH, the first parameter of the second PUSCH including a transmission resource for the second PUSCH, and the second PUSCH is used for carrying the HARQ retransmission of the Msg3.

In the embodiment of the present disclosure, the second PUSCH may be scrambled with the second RNTI or the third RNTI. When the network device indicates the third RNTI, the second PUSCH may be scrambled with the third RNTI, and when the network device does not indicate the third RNTI, the second PUSCH may be scrambled with the second RNTI.

It should be noted that when the first PDCCH is forced to indicate the HARQ retransmission scheduling for the Msg3, the third RNTI may be indicated, but at this time, there is only one scrambling manner for the second PUSCH: the second PUSCH is scrambled with the third RNTI.

In some embodiments, the first parameter may include one or more of the following:
information 1, first information, where the first information indicates a location of a time-domain resource of a PUSCH to which the first information belongs;
information 2, second information, where the second information indicates a location of a frequency-domain resource of a PUSCH to which the second information belongs;
information 3, a first duration, the first duration being related to a first timer, the first timer being a timer to be started or restarted after the terminal device sends the Msg3;
information 4, a first number of times, the first number of times being a maximum number of retransmissions of Msg3;
information 5, a first period, the first period being a time-domain resource period of the Msg3; or,
information 6, a second period, the second period being a transmission period of a PDCCH in response to the Msg3.

For information 1, first information of a first PUSCH is used to indicate a location of a time-domain resource for the first PUSCH, and first information of a second PUSCH is used to indicate a location of a time-domain resource for the second PUSCH.

The first information may include at least one of the following time-domain resource identifiers of the PUSCH to which the first information belongs: a subframe id, an SFN id, an H-SFN id, or the like. In the case of time domain repetition, the time-domain resource identifier is a first time-domain resource id corresponding to PUSCH transmission.

For information 2, second information of the first PUSCH is used to indicate a location of a frequency-domain resource for the first PUSCH, and second information of the second PUSCH is used to indicate a location of a frequency-domain resource for the second PUSCH.

The second information may include at least one of the following frequency-domain resource identifiers of the PUSCH to which the second information belongs: a subcarrier index, a carrier index, or a physical resource block (PRB) index.

Frequency-domain resources are sequentially numbered in order from low to high in the frequency domain. If the transmission of the Msg3 occupies multiple consecutive frequency-domain resources at the same time, the frequency-domain resource index is an index corresponding to a resource having the lowest frequency-domain location or the highest frequency-domain location among the frequency-domain resources occupied by the current transmission.

The information 3 may be referred to as a first timer duration, which may be identified as T_length. The first timer is a timer that is started or restarted after the terminal device sends the Msg3. It can be understood that the terminal device starts the first timer after sending the Msg3 for the first time, and starts or restarts the first timer after sending the Msg3 for the i-th time, where the value of i is greater than 1.

The time unit of the first duration may be a frame, a subframe, a second, a millisecond, or the like.

In some embodiments, the first duration is a maximum duration supported by the first timer, or an actual duration configured by the network device for the first timer, or a predefined duration in a protocol.

The maximum duration supported by the first timer can also be understood as the maximum duration that the network device can configure for the first timer.

For information 4, it may be referred to as the maximum number of retransmissions of Msg3.

In some embodiments, the first number of times is the maximum number of Msg3 retransmissions supported by the protocol, or the maximum number of Msg3 retransmissions actually configured by the network device.

The maximum number of Msg3 retransmissions supported by the protocol can also be understood as the maximum number of Msg3 retransmissions that the network device can configure.

For information 5, it may be referred to as an SPS period, which may be identified as SPS T_SPS.

In some embodiments, the first period is a minimum period supported by a first resource, or a period of a first resource actually configured by the network device, which is a semi-persistent scheduling SPS resource for transmitting the Msg3.

The information 6 may be referred to as a PDCCH period, which is a period of a PDCCH received by the terminal device in response to the Msg3.

In some embodiments, the second period is a minimum period supported by the PDCCH in response to the Msg3, or a transmission period of the PDCCH in response to the Msg3 actually configured by the network device.

In the embodiment of the present disclosure, the first RNTI is calculated based on the first parameter of the first PUSCH, where the first RNTI can be calculated based on one or more information included in the first parameter of the first PUSCH.

In the embodiment of the present disclosure, the second RNTI is calculated based on the first parameter of the second PUSCH, where the second RNTI can be calculated based on one or more information included in the first parameter of the second PUSCH.

In the embodiment of the present disclosure, a calculation formula for calculating a corresponding RNTI based on one or more information included in the first parameter is not limited in any way.

In an example, the calculation formula is formula (5): $RNTI = N + K 1 * s _ id + K 2 * \left(SFN_id mod \left(T_length/10\right)\right) + K 3 * f _ id$
where N, K1, K2, K3 are predefined values; s_id is the first subframe id occupied by the PUSCH transmission of Msg3; SFN_id is the first SFN id occupied by the PUSCH transmission of Msg3; f_id is the lowest or highest PRB or subcarrier in the frequency domain occupied by the PUSCH transmission of Msg3.

In an example, the calculation formula is formula (6): $\begin{matrix}RNTI = N + K 1 * s _ id + K 2 * \left(SFN_id mod \left(T_length/10\right)\right) + K 3 * f _ id \\ + K 4 * \left(H_SFN mod M\right)\end{matrix}$

Where K4 is a predefined value, H_SFN is the first H-SFN occupied by the PUSCH transmission of Msg3, *M = ceiling*(*T_length* / 10240) , and ceiling denotes upward rounding.

In an example, the calculation formula is formula (7):
$RNTI = N + K 1 * \left(subframe_id+10*SFN_id\right) + K 2 * f _ id$

In an example, the calculation formula is formula (8): $RNTI = N + K 1 * floor \left(\left(subframe_id+10*SFN_id\right)/T_SPS\right) + K 2 * f _ id$
where floor means rounding down.

In an example, the calculation formula is formula (9): $RNTI = N + K 1 * \left(subframe_id+10*SFN_id\right) + K 2 * f _ id + K 3 * \left(H-SFN mod M\right)$

In an example, the calculation formula is formula (10):
$\begin{matrix}RNTI = N + K 1 * floor \left(\left(subframe_id+10*SFN_id\right)/T_SPS\right) \\ + K 2 * f _ id + K 3 * \left(H_SFN mod M\right)\end{matrix}$

In the embodiment of the present disclosure, different calculation formulas can be adopted depending on different relationships between the first duration and the first duration threshold, , so that the RNTI calculated based on a different first duration has uniqueness.

In an example, the first duration threshold is 1024 ms, and if the first duration does not exceed the first duration threshold, the RNTI is calculated according to Formula (5), and if the first duration exceeds the first duration threshold, the RNTI is calculated according to Formula (6).

In an example, the first duration threshold is 1024 ms, and if the first duration does not exceed the first duration threshold, the RNTI is calculated according to Formula (7), and if the first duration exceeds the first duration threshold, the RNTI is calculated according to Formula (9).

In an example, the first duration threshold is 1024 ms, and if the first duration does not exceed the first duration threshold, the RNTI is calculated according to Formula (8), and if the first duration exceeds the first duration threshold, the RNTI is calculated according to Formula (10).

Note that, in the above example, 1024 ms is taken as the value of the first duration threshold, and the value of the first duration threshold may be another value.

In some embodiments, the RNTI is a fourth RNTI configured by the network device for the terminal device based on dedicated signaling, and the fourth RNTI is used for HARQ new transmission and HARQ retransmission of Msg3.

The PUSCH transmitted by the terminal device is scrambled with the fourth RNTI, and the PUSCH received by the network device is scrambled with the fourth RNTI.

Here, the first PUSCH and the second PUSCH are both scrambled with the fourth RNTI indicated by the network device based on the dedicated signaling, that is, the HARQ new transmission of Msg3 and the HARQ retransmission of Msg3 are both scrambled with the fourth RNTI. At this time, the fourth RNTI is used for scrambling the PUSCH (including HARQ new transmission of Msg3 and HARQ retransmission of Msg3).

In an example, the number of transmissions of the Msg3 is 3, and three PUSCHs (one HARQ new transmission of Msg3 and two HARQ retransmissions of Msg3) are all scrambled with the RNTI indicated by the network device through dedicated signaling.

In the embodiment of the present disclosure, the HARQ new transmission of Msg3 and the HARQ retransmission of Msg3 are scrambled with the same RNTI indicated by the network device through dedicated signaling, and different UEs can use different RNTIs based on an indication of the network.

In an embodiment of the present disclosure, a scrambling scheme for a PUSCH carrying the Msg3 includes, but is not limited to, at least one of the following:
scrambling scheme 1: both the HARQ new transmission of Msg3 and the HARQ retransmission of Msg3 are scrambled with the first RNTI;
scrambling scheme 2: the HARQ new transmission of Msg3 is scrambled with the first RNTI, and the HARQ retransmission of Msg3 is scrambled with the second RNTI;
scrambling scheme 3: the HARQ new transmission of Msg3 is scrambled with the first RNTI, and the HARQ retransmission of Msg3 is scrambled with the third RNTI; or,
scrambling scheme 4: both the HARQ new transmission of Msg3 and the HARQ retransmission of Msg3 are scrambled with the fourth RNTI.

In some embodiments, the RNTI is further used for scrambling a second PDCCH, which is used to respond to the Msg3.

In an embodiment of the present disclosure, for the Msg3, there is a second PDCCH that is a PDCCH that responds to the Msg3, and both the PUSCH carrying the Msg3 and the second PDCCH that responds to the Msg3 are scrambled with the same RNTI.

In an embodiment of the present disclosure, there is a second PDCCH for an Msg3. It can be understood that the Msg3 is carried on the PUSCH, and therefore it can be understood that for the PUSCH carrying the Msg3, there is a second PDCCH responsive to the PUSCH (first PUSCH or second PUSCH).

For the HARQ new transmission of Msg3, i.e., the first PUSCH, the second PDCCH in response to the HARQ new transmission of Msg3 and the first PUSCH are scrambled with the same RNTI.

The terminal device identifies whether the second PDCCH is a PDCCH transmitted to the terminal device based on the RNTI used by the received second PDCCH.

The terminal device transmits the HARQ new transmission of Msg3, and the network device transmits a second PDCCH to the terminal device in response to the received HARQ new transmission of the Msg3, where the second PDCCH indicates a HARQ retransmission scheduling for the Msg3 or indicates a reception of the Msg4.

In an example, the HARQ new transmission of Msg3, i.e., the first PUSCH, is scrambled with the first RNTI, and the second PDCCH in response to the HARQ new transmission of Msg3 is scrambled with the first RNTI.

In an example, the HARQ new transmission of Msg3, i.e., the first PUSCH, is scrambled with the fourth RNTI, and the second PDCCH responsive to the HARQ new transmission of Msg3 is scrambled with the fourth RNTI.

It should be noted that the second PDCCH in response to the HARQ new transmission of Msg3 may also be referred to as a first PDCCH.

For HARQ retransmission of Msg3, i.e., a second PUSCH, a second PDCCH in response to the HARQ retransmission of Msg3 and the second PUSCH are scrambled with the same RNTI.

Based on the first PDCCH indicating the retransmission scheduling for the Msg3, the terminal device transmits the HARQ retransmission of the Msg3, and the network device transmits a second PDCCH to the terminal device in response to the received HARQ retransmission of the Msg3, where the second PDCCH indicates the HARQ retransmission scheduling for the Msg3 or indicates the reception of the Msg4.

In an example, the HARQ retransmission of Msg3, i.e., the second PUSCH, is scrambled with the first RNTI, and the second PDCCH responsive to the HARQ retransmission of Msg3 is scrambled with the first RNTI.

In an example, the HARQ retransmission of Msg3, i.e., the second PUSCH, is scrambled with the second RNTI, and the second PDCCH in response to the HARQ retransmission of Msg3 is scrambled with the second RNTI.

In an example, the HARQ retransmission of Msg3, i.e., the second PUSCH, is scrambled with the third RNTI, and the second PDCCH responsive to the HARQ retransmission of Msg3 is scrambled with the third RNTI.

In an example, the HARQ retransmission of Msg3, i.e., the second PUSCH, is scrambled with the fourth RNTI, and the second PDCCH responsive to the HARQ retransmission of Msg3 is scramble with the fourth RNTI.

In the embodiment of the present disclosure, the second PDCCH in response to the Msg3 sent by the network device to the terminal device and the PUSCH transmission of the Msg3 use the same RNTI for scrambling, so that the terminal device can recognize the PDCCH sent to itself, thereby solving the problem of competition and conflict of resources between different terminal devices.

In some embodiments, the second PDCCH is used to indicate a HARQ retransmission scheduling for Msg3 or a scheduling for a first PDSCH, where the first PDSCH is used to carry Msg4.

After receiving the HARQ new transmission of the Msg3, the network device transmits the second PDCCH responding to the HARQ new transmission of the Msg3 to the terminal device. If the network device considers that the Msg3 is successfully received, the second PDCCH transmitted to the terminal device indicates the scheduling for the first PDSCH, so that the terminal device receives the first PDSCH based on the scheduling for the first PDSCH indicated by the second PDCCH; if the network device considers that the reception of the Msg3 has failed, the second PDCCH transmitted to the terminal device indicates the HARQ retransmission scheduling for the Msg3, so that the terminal device transmits the HARQ retransmission of the Msg3 based on the HARQ retransmission scheduling for the Msg3 indicated by the second PDCCH.

After receiving the HARQ retransmission of the Msg3, the network device transmits the second PDCCH in response to the HARQ retransmission of the Msg3 to the terminal device. If the network device considers that the Msg3 is successfully received, the second PDCCH transmitted to the terminal device indicates the scheduling for the first PDSCH, so that the terminal device receives the first PDSCH based on the scheduling for the first PDSCH indicated by the second PDCCH; if the network device considers that the reception of the Msg3 has failed, the second PDCCH transmitted to the terminal device indicates the HARQ retransmission scheduling for the Msg3, so that the terminal device transmits the HARQ retransmission of the Msg3 based on the HARQ retransmission scheduling for the Msg3 indicated by the second PDCCH.

When the terminal device receives the second PDCCH indicating the HARQ retransmission scheduling for the Msg3, the terminal device continues to transmit the HARQ retransmission of the Msg3 to the network device based on the second PDCCH until the terminal device receives the second PDCCH indicating the scheduling for the first PDSCH, and receives the first PDSCH based on the received second PDCCH.

It will be appreciated that the second PDCCH indicating the HARQ retransmission scheduling for Msg3 is used to indicate the HARQ retransmission of Msg3 and PUSCH resource for the HARQ retransmission of Msg3. When the terminal device receives the second PDCCH indicating the HARQ retransmission scheduling for the Msg3 transmitted by the network device, the terminal device performs HARQ retransmission of the Msg3 based on the PUSCH resource indicated by the second PDCCH.

It can be understood that indicating the scheduling for the first PDSCH can be understood as scheduling a transmission of the first PDSCH, and the second PDCCH indicating the scheduling for the first PDSCH indicates the transmission resource for the first PDSCH, thereby scheduling the transmission of the first PDSCH.

The wireless communication method provided by the embodiment of the present disclosure may be implemented as including, but is not limited to, the process shown in FIG. 8 or FIG. 9.

As shown in FIG. 8, the wireless communication method includes that:
In S801, a terminal device transmits HARQ new transmission of Msg3 to a network device.
In S802, the network device transmits a second PDCCH to the terminal device, where the second PDCCH indicates a scheduling of a first PDSCH.

The second PDCCH is used to respond to HARQ new transmission of the Msg3 received in S801.

In S803, the network device transmits the first PDSCH to the terminal device.

The network device transmits the first PDSCH to the terminal device based on the first PDSCH scheduled by the second PDCCH, and the terminal device receives the first PDSCH based on the first PDSCH scheduled by the second PDCCH.

As shown in FIG. 9, the wireless communication method includes that:
In S901, a terminal device transmits HARQ new transmission of Msg3 to a network device.
In S902, the network device transmits a second PDCCH to the terminal device, where the second PDCCH indicates HARQ retransmission of the Msg3.

The second PDCCH is used to respond to HARQ new transmission of the Msg3 received in S901.

In S903, the terminal device transmits HARQ retransmission of the Msg3 to the network device.

The terminal device performs HARQ retransmission of the Msg3 based on a PUSCH resource scheduled by the second PDCCH received in S902.

In S904, the network device transmits the second PDCCH to the terminal device, where the second PDCCH indicates HARQ retransmission of the Msg3.

The second PDCCH is used to respond to the HARQ retransmission of the Msg3 received in S903.

In S905, the terminal device transmits HARQ retransmission of the Msg3 to the network device.

The terminal device performs HARQ retransmission of Msg3 based on the a PUSCH resource scheduled by the second PDCCH received in S904.

In S906, the network device transmits the second PDCCH to the terminal device, where the second PDCCH indicates a scheduling for the first PDSCH.

The second PDCCH is used to respond to the HARQ retransmission of the Msg3 received in S905.

In S907, the network device transmits the first PDSCH to the terminal device.

The network device transmits the first PDSCH to the terminal device based on the first PDSCH scheduled by the second PDCCH, and the terminal device receives the first PDSCH based on the first PDSCH scheduled by the second PDCCH.

It should be noted that, in FIG. 8, taking the number of Msg3 transmissions being 1 as an example, while in FIG. 9, taking the number of Msg3 transmissions being 3 as an example. The number of Msg3 transmissions may be any positive integer other than 1 or 3.

In some embodiments, the second PDCCH indicates time-domain and/or frequency-domain resources for HARQ new transmission of the Msg3 or HARQ retransmission of the Msg3.

The second PDCCH transmitted by the network device carries the time-domain and/or frequency-domain resources for the HARQ new transmission of the Msg3 or the HARQ retransmission of the Msg3.

In an example, a second PDCCH responding to the HARQ new transmission of Msg3 or the HARQ retransmission of Msg3 carries time-domain and/or frequency-domain resources for the HARQ new transmission of Msg3.

In an example, for a second PDCCH responding to the HARQ new transmission of Msg3, time-domain and/or frequency-domain resources for the HARQ new transmission of Msg3 are carried; for the second PDCCH responding to the HARQ retransmission of the Msg3, time-domain and/or frequency-domain resources for the HARQ retransmission of the Msg3 are carried, where for a second PDCCH responding to a different HARQ retransmission of Msg3, time-domain and/or frequency-domain resources for the corresponding HARQ retransmission of Msg3 are carried.

In some embodiments, a condition that the second PDCCH is determined to be for the terminal device includes:
condition 1, the second PDCCH is scrambled with the RNTI;
condition 2: the second PDCCH indicates time-domain and/or frequency-domain resources for HARQ new transmission of the Msg3 or HARQ retransmission of the Msg3.

Here, a condition in which the second PDCCH is determined to be for the terminal device includes the condition 1 and the condition 2.

It can be understood that the condition in which the second PDCCH is determined to be for the terminal device may be the condition 1, or the condition in which the second PDCCH is determined to be for the terminal device may be the condition 2.

If the condition that the second PDCCH is determined to be for the terminal device is the condition 2, the terminal device matches the time-domain and/or frequency-domain resources indicated through the second PDCCH with the time-domain and/or frequency-domain resources used for HARQ new transmission of the Msg3 or HARQ retransmission of the Msg3, and determines that the second PDCCH satisfies the condition 2 if the time-domain and/or frequency-domain resources indicated through the second PDCCH are the same as the time-domain and/or frequency-domain resources used for HARQ new transmission of the Msg3 or HARQ retransmission of the Msg3.

In the embodiment of the present disclosure, when whether the second PDCCH is directed to the terminal device is determined based only on the condition 1, the calculated RNTI has uniqueness within the first duration. When whether the second PDCCH is for the terminal device is determined based on the condition 1 and the condition 2, the calculated RNTI has uniqueness within a second duration, where the second duration is smaller than the first duration. Therefore, whether or not the second PDCCH is directed to the terminal device is determined based on the condition 1 and the condition 2, and the second PDCCH can be identified jointly based on the RNTI and the resources carried in the second PDCCH, so that the terminal device can accurately identify the second PDCCH transmitted to itself within a third duration longer than the second duration, where the third duration is the same as or different from the first duration.

It will be appreciated that different values of the RNTI can be adjusted by setting first parameters and calculation formulas for RNTI.

It can be understood that in a scrambling scheme in which the HARQ new transmission of the Msg3 is scrambled with the first RNTI and the HARQ retransmission of the Msg3 is scrambled with the first RNTI or the second RNTI, a condition for which the second PDCCH is determined to be directed to the terminal device includes the condition 2.

In the embodiment of the present disclosure, the effective time of the RNTI can be reduced by using the condition 2, thereby reducing the consumption of the RNTI.

In some embodiments, the RNTI is further used for scrambling the first PDSCH.

The first PDSCH, the second PDCCH indicating the scheduling for the first PDSCH, and the PUSCH to which the second PDCCH scheduling the first PDSCH responds are scrambled with the same RNTI.

In an example, after receiving the HARQ new transmission of the Msg3, the network device transmits a second PDCCH indicating the first PDSCH to the terminal device, if the HARQ new transmission of the Msg3 and the second PDCCH are scrambled with the first RNTI, then the first PDSCH is scrambled with the first RNTI.

In an example, after receiving the HARQ retransmission of the Msg3, the network device transmits a second PDCCH indicating the first PDSCH to the terminal device, if the HARQ retransmission of the Msg3 and the second PDCCH are scrambled with the first RNTI, then the first PDSCH is scrambled with the first RNTI.

In an example, after receiving the HARQ retransmission of the Msg3, the network device transmits a second PDCCH indicating the first PDSCH to the terminal device, if the HARQ retransmission of the Msg3 and the second PDCCH are scrambled with the second RNTI, then the first PDSCH is scrambled with the second RNTI.

In an example, after receiving the HARQ retransmission of the Msg3, the network device transmits a second PDCCH indicating the first PDSCH to the terminal device, if the HARQ retransmission of the Msg3 and the second PDCCH are scrambled with the fourth RNTI, then the first PDSCH is scrambled with the fourth RNTI.

In some embodiments, the first PDSCH carries a first media access control layer control unit (MAC CE), and the first MAC CE is used for the terminal device to determine that contention resolution is successful.

The first MAC CE may also be referred to as a contention resolution MAC CE. When the terminal device receives the first PDSCH including the first MAC CE, the contention resolution is considered to be successful.

In some embodiments, the first MAC CE includes a first content that matches a common control channel service data unit in the Msg3.

After receiving the first PDSCH, the terminal device matches the content of the MAC CE in the first PDSCH with the CCCH SDU in the Msg3, and if the content of the MAC CE in the first PDSCH matches the CCCH SDU in the Msg3 successfully, the terminal device considers that the content contained in the contention resolution MAC CE matches the CCCH SDU in the Msg 3 sent by the UE, and determines that the conflict resolution is successful.

In some embodiments, based on FIG. 5, the method further includes:
after transmitting the PUSCH, the terminal device starts or restarts a first timer, where the first timer is used to monitor the second PDCCH.

The terminal device starts the first timer after transmitting the HARQ new transmission of the Msg3, and monitors a second PDCCH responding to the HARQ new transmission of the Msg3 during the operation of the first timer. The terminal device starts or restarts the first timer after transmitting the HARQ retransmission of the Msg3, and monitors a PDCCH in response to the HARQ retransmission of the Msg3 during the operation of the first timer.

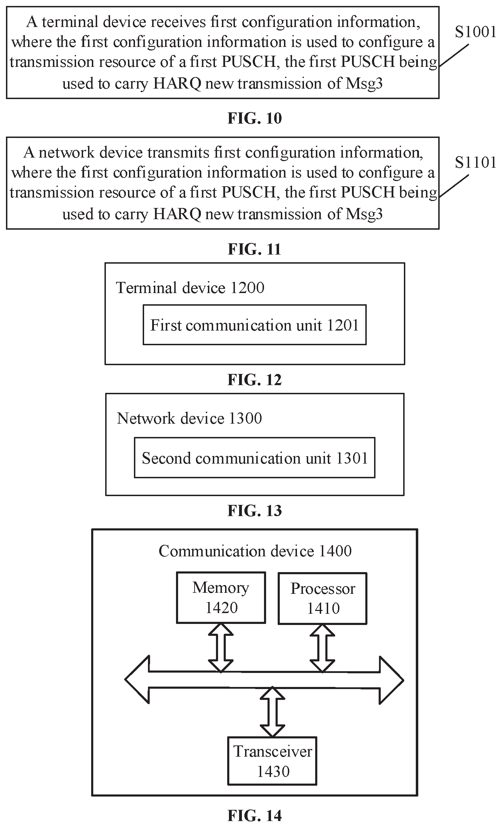

In some embodiments, based on FIG. 5, as shown in FIG. 10, the method further includes that:
In S1001, a terminal device receives first configuration information for configuring a transmission resource for a first PUSCH, where the first PUSCH is used for carrying HARQ new transmission of the Msg3.

In some embodiments, based on FIG. 6, as shown in FIG. 11, the method further includes that:
In S1101, a network device transmits first configuration information, where the first configuration information is used to configure a transmission resource for a first PUSCH, the first PUSCH being used to carry HARQ new transmission of the Msg3.

Before the operation in S601, the network device transmits first configuration information to the terminal device, where the first configuration information is used to configure a transmission resource for the first PUSCH. The terminal device receives the first configuration information transmitted by the network device before S501.

Since the resource for the first PUSCH configured through the first configuration information is a resource configured before the Msg3, the resource for the first PUSCH here can be understood as a pre-configured resource (PUR), the transmission of the Msg3 can be understood as a transmission on the PUR, and the transmission on the PUR can be understood as a transmission of PUSCH on the PUR.

Since contention exists between PURs configured through the first configuration information for different terminal devices, the PUR configured through the first configuration information can be understood as a contention-based PUR (CB-PUR).

In some embodiments, the transmission resource for the first PUSCH is an SPS resource.

In the embodiment of the present disclosure, the first configuration information can configure SPS time-frequency resources, and the SPS resources are time-domain periodic resources.

The wireless communication method provided by the embodiments of the present disclosure combines PRACH-less with PUR, and can transmit the Msg3 when the terminal device is in a non-connected state, thereby reducing the complicated process before the Msg3 is transmitted and reducing the air interface overhead.

When the Msg3 carries uplink data, the uplink data can be transmitted without entering a connected state, thereby reducing signaling interaction between the terminal device and the network device caused by data transmission, and saving terminal power consumption.

Hereinafter, the wireless communication method provided by the embodiments of the present disclosure will be described through multiple implementations.

### First implementation

A terminal device calculates a first RNTI according to a PUSCH time-frequency resource location of PRACH-less EDT Msg3 or CB-PUR initial transmission (i.e., HARQ new transmission). The first RNTI is used to scramble PUSCH transmission (including initial transmission and HARQ retransmission of the Msg3 or PUR), to scramble a PDCCH indicating a HARQ retransmission scheduling of the Msg3 or PUR and/or a network response PDSCH scheduling, and to scramble a network response PDSCH.

The specific implementation process is as follows:
1. UE receives uplink transmission resource configuration information from the network, specifically including:
   a resource configuration for Msg3 transmission of PRACH-less EDT or PUSCH transmission of CB-PUR may be, for example, semi-persistent scheduling (SPS) resources, including: SPS time-frequency resources, where the SPS resources are time-domain periodic resources.
2. For a UE in an RRC non-connected state (e.g., RRC_IDLE state), if the UE initiates PRACH-less EDT or CB-PUR, the UE transmits Msg3 on a PUSCH resource based on the network configuration in step 1, where the Msg3 contains uplink data and/or RRC messages of the UE (e.g., RRCEarlyDataRequest message (i.e., RRC early data transmission request), RRCConnectionRequest message (i.e., RRC connection establishment request), RRCConnectionResumeRequest message (i.e., RRC connection resume request), etc.).

The UE scrambles the PUSCH transmission with a first RNTI determined by the UE according to one or more of the following parameters/factors:
Factor 1 (information 1): a time-domain resource ID of initial transmission of Msg3 (that is, HARQ new transmission), such as a subframe id, a SFN id, a H-SFN id, and the like, which is a first time-domain resource ID corresponding to PUSCH transmission in the case of time domain repetition.
Factor 2 (information 2): a frequency-domain resource index of Msg3 initial transmission (i.e., HARQ new transmission), such as a subcarrier index, a carrier index, and a PRB index. Frequency-domain resources are sequentially numbered in order from low to high in the frequency domain. If the Msg3 transmission occupies multiple consecutive frequency-domain resources at the same time, the frequency-domain resource index is an index corresponding to a resource having the lowest frequency-domain location or the highest frequency-domain location among the frequency-domain resources occupied by the current transmission.
Factor 3 (information 3): a first timer duration T_length, where the first timer is a timer started after the UE transmits the Msg3, for example, the first timer is a mac-ContentionResolutionTimer, and the UE monitors a PDCCH indicating Msg3 retransmission or Msg4 (i.e., a network response) during operation of the first timer. The T_length is a maximum length supported by the first timer (configurable by the base station), or is an actual length configured by the base station.
Factor 4 (information 4): a maximum number of retransmissions of Msg3, which is a maximum number of retransmissions supported by the protocol (configurable by the base station) or an actual maximum number of retransmissions configured by the base station.
Factor 5 (information 5): a SPS period T_SPS, which is a minimum period (configurable by the base station) that can be supported by a SPS resource for transmitting Msg3, or is a period actually configured by the base station.
Factor 6 (information 6): a PDCCH period, which is a minimum period (configurable by the base station) supported by a PDCCH for indicating Msg3 retransmission or Msg4/network response, or a period actually configured by the base station.

### Example 1

If T_length does not exceed 10.24s, a first RNTI is calculated according to Formula (11) or Formula (12): $N + K 1 * s _ id + K 2 * \left(SFN_id mod \left(T_length/10\right)\right) + K 3 * f _ id$$N - K 1 * s _ id - K 2 * \left(SFN_id mod \left(T_length/10\right)\right) - K 3 * f _ id$
where N, K1, K2, K3 are predefined values; s_id is a first subframe id occupied by PUSCH transmission of Msg3; SFN_id is a first SFN id occupied by the PUSCH transmission of Msg3; f_id is a lowest or highest PRB or subcarrier in the frequency domain occupied by the PUSCH transmission of Msg3; and T_length is in units of subframes or milliseconds.

If T_length exceeds 10.24s, the first RNTI is calculated according to Formula (13) or Formula (14) :
$\begin{matrix}N + K 1 * s _ id + K 2 * \left(SFN_id mod \left(T_length/10\right)\right) \\ + K 3 * f _ id + K 4 * \left(H_SFN mod M\right)\end{matrix}$$\begin{matrix}N - K 1 * s _ id - K 2 * \left(SFN_id mod \left(T_length/10\right)\right) \\ - K 3 * f _ id - K 4 * \left(H_SFN mod M\right)\end{matrix}$
where N, K1, K2, K3, s_id, SFN_id, f_id, and T_length have the same meanings as above. K4 is a predefined value, H_SFN is a first H-SFN id occupied by the PUSCH transmission of Msg3, M = ceiling (T_length/10240).

### Example 2

If T_length does not exceed 10.24s, the first RNTI is calculated according to Formula (15), Formula (16), Formula (17), or Formula (18):
$N + K 1 * \left(subframe_id+10*SFN_id\right) + K 2 * f _ id$$N - K 1 * \left(subframe_id+10*SFN_id\right) + K 2 * f _ id$ $N + K 1 * floor \left(\left(subframe_id+10*SFN_id\right)/T_SPS\right) + K 2 * f _ id$ $N - K 1 * floor \left(\left(subframe_id+10*SFN_id\right)/T_SPS\right) - K 2 * f _ id$

If T_length exceeds 10.24s, the first RNTI is calculated according to Formula (19), Formula (20), Formula (21), or Formula (22): $N + K 1 * \left(subframe_id+10*SFN_id\right) + K 2 * f _ id + K 3 * \left(H-SFN mod M\right)$ $N - K 1 * \left(subframe_id+10*SFN_id\right) - K 2 * f _ id - K 3 * \left(H_SFN mod M\right)$ $\begin{matrix}N + K 1 * floor \left(\left(subframe_id+10*SFN_id\right)/T_SPS\right) + K 2 * f _ id \\ + K 3 * \left(H-SFN mod M\right)\end{matrix}$ $\begin{matrix}N - K 1 * floor \left(\left(subframe_id+10*SFN_id\right)/T_SPS\right) - K 2 * f _ id \\ - K 3 * \left(H-SFN mod M\right)\end{matrix}$

It should be noted that the calculation formula of the first RNTI has many expressions, and the above formula only gives some examples.

3. After transmitting the Msg3 or PUR, the UE starts the first timer and monitors the PDCCH during the operation of the first timer.

Based on different monitoring results, the following are included:
a. If the UE receives a PDCCH scrambled with the first RNTI and the PDCCH indicates an Msg3 retransmission or a PUR retransmission, the UE transmits an Msg3 or PUR retransmission on a PUSCH resource indicated by the PDCCH and scrambles the PUSCH transmission with the first RNTI. The UE starts or restarts the first timer after completion of the Msg3 or PUR retransmission, and monitors the PDCCH during operation of the first timer. If the PDCCH scrambled with the first RNTI is received, the UE performs PUSCH transmission of the Msg3 or PUR retransmission or the PDSCH reception of the Msg4 according to an indication of the PDCCH, the PUSCH or PDSCH being scrambled with the first RNTI.
b. If the UE receives a PDCCH scrambled with the first RNTI, and the PDCCH indicates PDSCH reception, the UE considers that the contention resolution is successful if the PDSCH contains a contention resolution MAC CE, and content contained in the contention resolution MAC CE matches the CCCH SDU transmitted by the UE in Msg3 or PUR.

The method provided in the first implementation causes the UE to calculate the first RNTI according to the PUSCH time-frequency resource location of initial transmission of Msg3, and the method can ensure that the first RNTI has uniqueness during the operation of the first timer, and can effectively avoid the problem that the first RNTI is ambiguous. However, considering that the retransmission of Msg3 will trigger the start and restart of the first timer, this method needs to consume more RNTI space.

### Second implementation

For each PRACH-less EDT Msg3 or CB-PUR transmission (including an initial transmission and a HARQ retransmission of the Msg3 or PUR), the terminal calculates an RNTI according to a PUSCH time-frequency resource location of the current transmission of the Msg3 or PUR (that is, RNTIs used for the initial transmission and retransmission may be different). This RNTI is used to scramble the PUSCH for the current transmission, to scramble a PDCCH indicating HARQ retransmission scheduling of the Msg3 or PUR and/or the network response PDSCH scheduling, and to scramble the network response PDSCH.

The specific implementation process is as follows:
1. UE receives uplink transmission resource configuration information from the network, specifically including:
   a resource configuration for Msg3 transmission of PRACH-less EDT or PUSCH transmission of the CB-PUR, for example, may be SPS resources, including SPS time-frequency resources that are time-domain periodic resources.
2. For a UE in an RRC non-connected state (e.g., an RRC_IDLE state), if the UE initiates a PRACH-less EDT or CB-PUR, the UE transmits Msg3 on a PUSCH resource based on the network configuration in step 1. The UE scrambles the PUSCH transmission with RNTI, and the calculation method of the RNTI is the same as that of the first implementation.
3. The UE starts the first timer after the transmission of Msg3 or PUR, and the UE monitors the PDCCH during the operation of the first timer.
   Based on different monitoring results, the following are included:
   a. If the UE receives a PDCCH scrambled with the RNTI, and the PDCCH indicates an Msg3 retransmission or a PUR retransmission, the UE transmits the Msg3 or PUR retransmission on a PUSCH resource indicated by the PDCCH, calculates a second RNTI using a time-frequency resource location of the current PUSCH, where the calculation method is the same as that in step 2, and the UE scrambles the current PUSCH transmission with the second RNTI, and then proceeds to step 4.
   b. If the UE receives a PDCCH scrambled with RNTI and the PDCCH indicates PDSCH reception, if the PDSCH contains a contention resolution MAC CE and content contained in the contention resolution MAC CE matches the CCCH SDU transmitted by the UE in Msg3 or PUR, the UE considers that the contention resolution is successful.
4. The UE starts or restarts the first timer after completing the HARQ retransmission of the Msg3 or PUR, and monitors the PDCCH during the operation of the first timer.

Based on different monitoring results, the following are included:
a. If the UE receives a PDCCH scrambled with a second RNTI, and the PDCCH indicates an Msg3 retransmission or a PUR retransmission, the UE transmits the Msg3 or PUR retransmission on a PUSCH resource indicated by the PDCCH, calculates a third RNTI based on a time-frequency resource location of the current PUSCH, the calculation method being the same as that in step 2, and the UE scrambles the current PUSCH transmission with the third RNTI. The third RNTI is also used to scramble a PDCCH to be received by the UE next time, which is used to indicate a HARQ retransmission scheduling of Msg3 or PUR and/or a network response PDSCH scheduling, and the third RNTI is also used to scramble the network response PDSCH.
b. If the UE receives a PDCCH scrambled with the second RNTI, and the PDCCH indicates PDSCH reception, the UE considers that the contention resolution is successful if the PDSCH contains a contention resolution MAC CE, and content contained in the contention resolution MAC CE matches a CCCH SDU transmitted by the UE in Msg3 or PUR.

According to the method provided in the second implementation, the UE can calculate the RNTI according to the PUSCH time-frequency resource location of the current transmission of the Msg3, which can ensure that the RNTI remains unique during the operation of the first timer following a single start or restart after the current transmission of the Msg3 is completed, and can effectively avoid the problem of RNTI ambiguity. At the same time, because the method only needs to ensure that the RNTI is unique during a single operation period of the first timer, the implementation can reduce the RNTI consumption compared with the first implementation.

### Third implementation

For an initial transmission of a PRACH-less EDT Msg3 or CB-PUR transmission, the terminal calculates a first RNTI according to a PUSCH time-frequency resource location of the initial transmission of the Msg3 or PUR, where the first RNTI is used to scramble a PUSCH initial transmission, to scramble a PDCCH for indicating a HARQ retransmission scheduling of the Msg3 or PUR and/or a network response PDSCH scheduling after the initial transmission of the Msg3 or PUR, and to scramble a network response PDSCH.

If a UE receives a PDCCH indicating Msg3 or PUR retransmission scrambled with the first RNTI, the network simultaneously indicates a third RNTI, where the third RNTI is used to scramble the PUSCH of the Msg3 or PUR retransmission, and to scramble a PDCCH indicating a HARQ retransmission scheduling of the Msg3 or PUR and/or the network response PDSCH scheduling after the current PUSCH transmission.

The specific implementation process is as follows:
1. The UE receives uplink transmission resource configuration information from the network, specifically including:
   a resource configuration for Msg3 transmission of the PRACH-less EDT or PUSCH transmission of the CB-PUR, for example, may be SPS resources, including SPS time-frequency resources, where the SPS resources are time-domain periodic resources.
2. For a UE in an RRC non-connected state (e.g., an RRC_IDLE state), if the UE initiates a PRACH-less EDT or CB-PUR, the UE transmits Msg3 on a PUSCH resource based on the network configuration in step 1. The UE scrambles the PUSCH transmission with a first RNTI, and the calculation method of the first RNTI is the same as that of the first implementation.
3. The UE starts the first timer after the transmission of Msg3 or PUR, and the UE monitors a PDCCH during the operation of the first timer.

Based on different monitoring results, the following are included:
a. If the UE receives a PDCCH scrambled with the first RNTI, and the PDCCH indicates an Msg3 retransmission or a PUR retransmission, the UE transmits the Msg3 or PUR retransmission on a PUSCH resource indicated by the PDCCH.
   - if the base station assigns a third RNTI to the UE, the UE scrambles the current Msg3 or PUR retransmission with the third RNTI; the third RNTI is also used to scramble a PDCCH to be received subsequently by the UE, which is used to indicate a HARQ retransmission scheduling of the Msg3 or PUR and/or a network response PDSCH scheduling, and the third RNTI is also used to scramble the network response PDSCH.
   - if the base station does not allocate a third RNTI to the UE, the UE scrambles the current Msg3 or PUR retransmission with the second RNTI; the second RNTI is also used to scramble a PDCCH to be received by the UE next time, which is used to indicate the HARQ retransmission scheduling of the Msg3 or PUR and/or the network response PDSCH scheduling; and the second RNTI is also used to scramble the network response PDSCH. (The network may also be forced to have to allocate the third RNTI to the UE in the case of scheduling Msg3 retransmission, that is, only the first case exists).

The third RNTI is allocated by the base station to the UE after the UE completes Msg3 or PUR initial transmission, and the third RNTI may be carried in a PDCCH or PDSCH scrambled with the second RNTI, such as in a PDCCH indicating Msg3 or PUR retransmission. The specific indication manner may include:
Manner 1: the network device directly indicates an absolute value of the third RNTI;
Manner 2: the network device configures an RNTI list via broadcast, where the RNTI list may be at a cell level, a CE level, or a SPS resource configuration level; and the network indicates one of RNTIs in the corresponding RNTI list as the third RNTI, such as by indicating an index of the RNTI.

b. If the UE receives a PDCCH scrambled with the first RNTI, and the PDCCH indicates PDSCH reception, the UE considers that the contention resolution is successful if the PDSCH contains a contention resolution MAC CE, and the content contained in the contention resolution MAC CE matches the CCCH SDU transmitted by the UE in Msg3 or PUR.

The method of the third implementation allows the base station to allocate an RNTI to the UE when scheduling Msg3 retransmission, which can reduce RNTI consumption compared with the first implementation and the second implementation.

### Fourth implementation

For PRACH-less EDT Msg3 or CB-PUR transmission, the terminal calculates an RNTI based on a PUSCH time-frequency resource location of the Msg3 or the PUR transmission. The RNTI is used to scramble the PUSCH transmission, to scramble a PDCCH indicating the HARQ retransmission scheduling of the Msg3 or the PUR and/or the network response PDSCH scheduling, and to scramble the network response PDSCH. When the UE receives the PDCCH, the UE considers the PDCCH to be for itself when a first condition is satisfied, where the first condition is that the PDCCH is scrambled with the RNTI, and a time-domain location indicated in the PDCCH is consistent with a time-domain resource location at which the UE transmits the Msg3.

The specific implementation process is as follows:
1. The UE receives uplink transmission resource configuration information from the network, specifically including:
   a resource configuration for Msg3 transmission of the PRACH-less EDT or PUSCH transmission of the CB-PUR, which may be, for example, SPS resources, including SPS time-frequency resources, where the SPS resources are time-domain periodic resources.
2. For a UE in an RRC non-connected state (e.g., an RRC_IDLE state), if the UE initiates a PRACH-less EDT or CB-PUR, the UE transmits Msg3 on a PUSCH resource based on the network configuration in step 1. The UE scrambles the PUSCH transmission with a RNTI, and the calculation method of the RNTI is the same as that of the first implementation.
   Different from the first implementation, the RNTI calculated in the first implementation can ensure that the value of the RNTI is unique within the first duration (such as the maximum duration of the first timer or a duration related to the maximum duration of the first timer and the maximum number of retransmissions of Msg3), while the RNTI calculated in this implementation of the present disclosure can ensure that the value of the RNTI is unique within the second duration, where the first duration is greater than the second duration. Therefore, the difference between the two is mainly reflected in the formula parameters, or the value of predefined parameters.
3. For Msg3 or PUR retransmission, the UE may still use the original first RNTI for scrambling (the same as the first implementation, referred to as scheme 1 here); or, the UE may calculate a second RNTI based on a PUSCH time-frequency resource corresponding to the retransmission, set the first RNTI equal to the second RNTI, and use the updated first RNTI for scrambling (the same as the second implementation, referred to as scheme 2 here).
4. The UE starts the first timer after each transmission of Msg3 or PUR, and the UE listens to the PDCCH during the operation of the first timer. If the UE receives a PDCCH scrambled with the first RNTI, and time-domain resource information indicated by the PDCCH is the same as a PUSCH time-frequency resource used for the initial transmission of Msg3 (corresponding to scheme 1 in step 3) or the previous transmission of Msg3 (corresponding to scheme 2 in step 3) of the UE:
   a. If the PDCCH indicates Msg3 retransmission or PUR retransmission, the UE transmits the Msg3 or PUR retransmission on the PUSCH resource indicated by the PDCCH.
   b. If the PDCCH indicates PDSCH reception, if the PDSCH contains a contention resolution MAC CE, and the content contained in the contention resolution MAC CE matches the CCCH SDU transmitted by the UE in Msg3 or PUR, the UE considers the contention resolution to be successful.

In the fourth implementation, the uniqueness of the first RNTI can be ensured in a shorter time, and thus the RNTI consumption can be further reduced.

### Fifth implementation

The network configures a fourth RNTI for a UE through UE-specific signaling. The fourth RNTI is used by the UE to scramble PUSCH transmission of the Msg3 or CB-PUR in the PRACH-less EDT. The fourth RNTI is also used to scramble a PDCCH indicating HARQ retransmission scheduling of the Msg3 or PUR and/or a network response PDSCH scheduling, and to scramble the network response PDSCH.

The specific implementation process is as follows:
1. The UE receives uplink transmission resource configuration information from the network, specifically including:
   a resource configuration for Msg3 transmission in the PRACH-less EDT or PUSCH transmission of the CB-PUR, which may be, for example, SPS resources, including: SPS time-frequency resources, where the SPS resources are time-domain periodic resources.
2. The base station configures the fourth RNTI for the UE through UE-specific signaling, such as the fourth RNTI is carried in a RRC release message.
3. For a UE in an RRC non-connected state (e.g., an RRC_IDLE state), if the UE initiates a PRACH-less EDT or CB-PUR, the UE transmits Msg3 on a PUSCH resource based on the network configuration in step 1.

The UE scrambles the PUSCH transmission with the fourth RNTI.

4. The UE starts the first timer after the transmission of Msg3 or PUR, and the UE listens to the PDCCH during the operation of the first timer.

Based on different listening results, the following are included:
a. If the UE receives a PDCCH scrambled with the fourth RNTI, and the PDCCH indicates Msg3 retransmission or PUR retransmission, the UE transmits the Msg3 or PUR retransmission on a PUSCH resource indicated by the PDCCH.
b. If the UE receives a PDCCH scrambled with the fourth RNTI, and the PDCCH indicates PDSCH reception, the UE considers that the contention resolution is successful if the PDSCH contains a contention resolution MAC CE, and the content contained in the contention resolution MAC CE matches the CCCH SDU transmitted by the UE in Msg3 or PUR.

In the fifth implementation, the fourth RNTI may be determined based on a network configuration, and different UEs can use different RNTIs through the network.

The preferred implementations of the present disclosure have been described in detail above with reference to the accompanying drawings, but the present disclosure is not limited to the specific details in the above implementations, and a variety of simple modifications can be made to the technical solution of the present disclosure within the scope of the technical concept of the present disclosure, and these simple modifications all fall within the protection scope of the present disclosure. For example, various specific technical features described in the above embodiments can be combined in any suitable manner without contradiction, and various possible combinations will not be further described in the present application to avoid unnecessary repetition. As another example, any combination of various embodiments of the present disclosure may be made, and as long as it does not depart from the idea of the present disclosure, it should also be regarded as the disclosed content of the present disclosure. For another example, on the premise that there is no conflict, various embodiments and/or the technical features described in the present disclosure can be arbitrarily combined with the prior art, and the technical solution obtained after the combination should also fall within the protection scope of the present disclosure.

It should also be understood that in the various method embodiments of the present disclosure, the size of the sequence numbers of the above-described processes does not mean the execution order, and the execution order of each process should be determined by its function and internal logic, and should not constitute any limitation on the implementation process of the embodiments of the present disclosure. Further, in the embodiments of the present disclosure, the terms "downlink", "uplink", or "sidelink" are used to indicate a transmission direction of a signal or data, where "downlink" is used to indicate that the transmission direction of the signal or data is a first direction transmitted from the station to the UE in a cell, "uplink" is used to indicate that the transmission direction of the signal or data is a second direction transmitted from the UE in the cell to the station, and "sidelink" is used to indicate that the transmission direction of the signal or data is a third direction transmitted from a first UE to a second UE. For example, "downlink signal" means that the transmission direction of the signal is the first direction. In addition, in the embodiment of the present disclosure, the term "and/or" is merely a description of an association between related objects, indicating that there may be three kinds of relationships. Specifically, A and/or B may represent three cases in which A is present alone, A and B are present at the same time, and B is present alone. In addition, the character "/" herein generally indicates that the associated objects before and after are in an "or" relationship.

FIG. 12 is a schematic structural diagram of a terminal device provided by an embodiment of the present disclosure. As shown in FIG. 12, the terminal device 1200 includes:
a first communication unit 1201, configured to transmit a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource for hybrid automatic repeat request (HARQ) new transmission or HARQ retransmission of the Msg3, or the RNTI indicated by a network device.

In some embodiments, if the PUSCH is a first PUSCH, the first PUSCH is the HARQ new transmission of the Msg3, the RNTI is a first RNTI determined based on a first parameter of the first PUSCH, the first parameter of the first PUSCH including a transmission resource of the first PUSCH.

In some embodiments, if the PUSCH is a second PUSCH, the second PUSCH is the HARQ retransmission of the Msg3, the RNTI is a first RNTI determined based on a first parameter of a first PUSCH, the first parameter of the first PUSCH including a transmission resource of the first PUSCH, and the first PUSCH is the HARQ new transmission of the Msg3.

In some embodiments, if the PUSCH is a second PUSCH, the second PUSCH is the HARQ retransmission of the Msg3, the RNTI is a second RNTI determined based on a first parameter of the second PUSCH, the first parameter of the second PUSCH including a transmission resource of the second PUSCH.

In some embodiments, if the PUSCH is a second PUSCH, the second PUSCH is the HARQ retransmission of the Msg3, the RNTI is a third RNTI indicated by the network device.

In some embodiments, the third RNTI is indicated through a first physical downlink control channel (PDCCH), the first PDCCH being used to response to the HARQ new transmission of the Msg3 and to indicate a HARQ retransmission scheduling of the Msg3.

In some embodiments, a manner in which the network device indicates the third RNTI includes that:
the network device indicates an absolute value of the third RNTI; or,
the network device indicates a first identifier, an RNTI corresponding to the first identifier in an RNTI list is the third RNTI.

In some embodiments, the RNTI list is configured by the network device via a broadcast message.

In some embodiments, if the network device indicates the third RNTI, the HARQ retransmission of the Msg3 is scrambled with the third RNTI;
if the network device does not indicate the third RNTI, the HARQ retransmission of the Msg3 is scrambled with a second RNTI determined based on a first parameter of a second PUSCH, the first parameter of the second PUSCH including a transmission resource of the second PUSCH for carrying the HARQ retransmission of the Msg3.

In some embodiments, the first parameter includes one or more of the following:
first information, which is used to indicate a location of a time-domain resource of a PUSCH to which the first information belongs;
second information, which is used to indicate a location of a frequency-domain resource of a PUSCH to which the second information belongs;
a first duration, the first duration being related to a first timer started or restarted after the terminal device transmits the Msg3;
a first number of times, the first number of times being the maximum number of retransmissions of the Msg3;
a first period, which is a time-domain resource period of the Msg3; or,
a second period, which is a transmission period of a PDCCH in response to the Msg3.

In some embodiments, the first duration is a maximum duration supported by the first timer, or an actual duration configured by the network device for the first timer, or a predefined duration in a protocol.

In some embodiments, the first number of times is a maximum number of Msg3 retransmissions supported by the protocol, or a maximum number of Msg3 retransmissions actually configured by the network device.

In some embodiments, the first period is a minimum period supported by a first resource, or a period of a first resource actually configured by the network device, the first resource being a semi-persistent scheduling (SPS) resource for transmitting the Msg3.

In some embodiments, the second period is a minimum period supported by the PDCCH in response to the Msg3, or a transmission period of the PDCCH in response to the Msg3 actually configured by the network device.

In some embodiments, the RNTI is a fourth RNTI configured by the network device for the terminal device based on dedicated signaling, and the fourth RNTI is used for HARQ new transmission and HARQ retransmission of Msg3.

In some embodiments, the RNTI is further used for scrambling a second PDCCH, which is used to respond to the Msg3.

In some embodiments, the second PDCCH is used to indicate a HARQ retransmission scheduling of Msg3 or a scheduling of a first PDSCH, the first PDSCH is used to carry an Msg4.

In some embodiments, the second PDCCH indicates time-domain and/or frequency-domain resources used for HARQ new transmission of the Msg3 or HARQ retransmission of the Msg3.

In some embodiments, a condition that the second PDCCH is determined to be for the terminal device includes:
the second PDCCH is scrambled with the RNTI;
the second PDCCH indicates time-domain and/or frequency-domain resources used for HARQ new transmission of the Msg3 or HARQ retransmission of the Msg3.

In some embodiments, the RNTI is further used for scrambling the first PDSCH.

In some embodiments, the first PDSCH carries a first media access control layer control unit (MAC CE), and the first MAC CE is used for the terminal device to determine that contention resolution is successful.

In some embodiments, the first MAC CE includes a first content that matches a common control channel service data unit (CCCH SDU) in the Msg3.

In some embodiments, the terminal device 1200 further includes:
a control unit, configured to start or restart a first timer after transmitting the PUSCH, the first timer being used to monitor the second PDCCH.

In some embodiments, the first communication unit 1201 is further configured to receive first configuration information, which is used for configuring a transmission resource of a first PUSCH, the first PUSCH being used for carrying HARQ new transmission of the Msg3.

In some embodiments, the transmission resource of the first PUSCH is an SPS resource.

The first communication unit in the terminal device may be implemented by a transceiver in the terminal device. It will be understood that the control unit in the terminal device may be implemented by a processor in the terminal device.

FIG. 13 is a schematic structural diagram of a network device provided by an embodiment of the present disclosure. As shown in FIG. 13, the network device 1300 includes:
a second communication unit 1301, configured to receive a physical uplink shared channel (PUSCH) scrambled with a radio network temporary identifier (RNTI), where the PUSCH is used to carry an Msg3, and transmission of the Msg3 does not require an Msg1 and/or an Msg2; and the RNTI is determined based on a transmission resource of hybrid automatic repeat request (HARQ) new transmission or HARQ retransmission of the Msg3, or the RNTI is indicated by the network device.

In some embodiments, if the PUSCH is a first PUSCH, the first PUSCH is a HARQ new transmission of the Msg3, the RNTI is a first RNTI determined based on a first parameter of the first PUSCH, the first parameter of the first PUSCH including a transmission resource of the first PUSCH.

In some embodiments, if the PUSCH is a second PUSCH, the second PUSCH is a HARQ retransmission of the Msg3, the RNTI is a first RNTI determined based on a first parameter of the first PUSCH, the first parameter of the first PUSCH including a transmission resource of the first PUSCH, and the first PUSCH being a HARQ new transmission of the Msg3.

In some embodiments, if the PUSCH is a second PUSCH, the second PUSCH is a HARQ retransmission of the Msg3, the RNTI is a second RNTI determined based on a first parameter of the second PUSCH, the first parameter of the second PUSCH including a transmission resource of the second PUSCH.

In some embodiments, if the PUSCH is a second PUSCH, the second PUSCH is a HARQ retransmission of the Msg3, the RNTI is a third RNTI indicated by the network device.

In some embodiments, the third RNTI is indicated through a first physical downlink control channel (PDCCH), the first PDCCH being used to respond to HARQ new transmission of the Msg3 and to indicate a HARQ retransmission scheduling of the Msg3.

In some embodiments, an manner in which the network device indicates the third RNTI includes that:
the network device indicates an absolute value of the third RNTI; or,
the network device indicates a first identifier, an RNTI corresponding to the first identifier in an RNTI list is the third RNTI.

In some embodiments, the RNTI list is configured by the network device via a broadcast message.

In some embodiments, if the network device indicates the third RNTI, the HARQ retransmission of the Msg3 is scrambled with the third RNTI;
if the network device does not indicate the third RNTI, the HARQ retransmission of the Msg3 is scrambled with a second RNTI determined based on a first parameter of a second PUSCH, the first parameter of the second PUSCH including a transmission resource of the second PUSCH for carrying the HARQ retransmission of the Msg3.

In some embodiments, the first parameter includes one or more of the following:
first information for indicating a location of a time-domain resource of a PUSCH to which the first information belongs;
second information for indicating a location of a frequency-domain resource of a PUSCH to which the second information belongs;
a first duration, the first duration being related to a first timer, the first timer being a timer that is started or restarted after the terminal device transmits the Msg3;
a first number of times, the first number of times being a maximum number of retransmissions of the Msg3;
a first period which is a time-domain resource period of the Msg3; or,
a second period which is a transmission period of a PDCCH in response to the Msg3.

In some embodiments, the first duration is a maximum duration supported by the first timer, or an actual duration configured by the network device for the first timer, or a predefined duration in a protocol.

In some embodiments, the first number of times is a maximum number of Msg3 retransmissions supported by the protocol, or a maximum number of Msg3 retransmissions actually configured by the network device.

In some embodiments, the first period is a minimum period supported by a first resource, or a period of a first resource actually configured by the network device, where the first resource is a semi-persistent scheduling (SPS) resource for transmitting the Msg3.

In some embodiments, the second period is a minimum period supported by the PDCCH in response to the Msg3, or a transmission period of the PDCCH in response to the Msg3 actually configured by the network device.

In some embodiments, the RNTI is a fourth RNTI configured by the network device for the terminal device based on dedicated signaling, and the fourth RNTI is used for HARQ new transmission and HARQ retransmission of Msg3.

In some embodiments, the RNTI is further used for scrambling a second PDCCH to respond to the Msg3.

In some embodiments, the second PDCCH is used to indicate a HARQ retransmission scheduling of the Msg3 or a first scheduling of a PDSCH for carrying an Msg4.

In some embodiments, the second PDCCH indicates time-domain and/or frequency-domain resources used for HARQ new transmission of the Msg3 or HARQ retransmission of the Msg3.

In some embodiments, a condition that the second PDCCH is determined to be for the terminal device includes:
the second PDCCH is scrambled with the RNTI;
the second PDCCH indicates time-domain and/or frequency-domain resources used for HARQ new transmission of the Msg3 or HARQ retransmission of the Msg3.

In some embodiments, the RNTI is further used for scrambling the first PDSCH.

In some embodiments, the first PDSCH carries a first media access control layer control unit (MAC CE), and the first MAC CE is used for the terminal device to determine that contention resolution is successful.

In some embodiments, the first MAC CE includes a first content that matches a common control channel service data unit in the Msg3.

In some embodiments, the second communication unit 1301 is further configured to transmit first configuration information for configuring transmission resources of a first PUSCH for carrying HARQ new transmission of the Msg3.

In some embodiments, the transmission resource of the first PUSCH is an SPS resource.

The second communication unit in the network device may be implemented by a transceiver in the network device. It will be appreciated that a processing unit may also be included in the network device for processing the PUSCH. The processing unit may be implemented by a processor in a network device.

Those skilled in the art should understand that the related description of the above-described terminal device or network device according to the embodiments of the present disclosure can be understood with reference to the related description of the wireless communication method according to the embodiments of the present disclosure.

FIG. 14 is a schematic structural diagram of a communication device 1400 provided by an embodiment of the present disclosure. The communication device may be a terminal device or a network device. The communication device 1400 illustrated in FIG. 14 includes a processor 1410 that can invoke and execute a computer program from a memory to implement the methods in the embodiments of the present disclosure.

Optionally, as shown in FIG. 14, the communication device 1400 may further include a memory 1420. Here, the processor 1410 may invoke and execute a computer program from the memory 1420 to implement the methods in the embodiments of the present disclosure.

The memory 1420 may be a separate device independent of the processor 1410, or may be integrated into the processor 1410.

Optionally, as shown in FIG. 14, the communication device 1400 may further include a transceiver 1430, and the processor 1410 may control the transceiver 1430 to communicate with other devices, specifically, may transmit information or data to or receive information or data sent by other devices.

Here, the transceiver 1430 may include a transmitter and a receiver. The transceiver 1430 may further include antennas, and the number of antennas may be one or more.

Optionally, the communication device 1400 may specifically be the network device according to the embodiments of the present disclosure, and the communication device 1400 may realize corresponding processes realized by the network device in each method of the embodiments of the present disclosure, which will not be described again here for simplicity.

Optionally, the communication device 1400 may specifically be a mobile terminal/terminal device according to the embodiments of the present disclosure, and the communication device 1400 may realize corresponding processes realized by the mobile terminal/terminal device in each method of the embodiments of the present disclosure, which will not be described again here for simplicity.

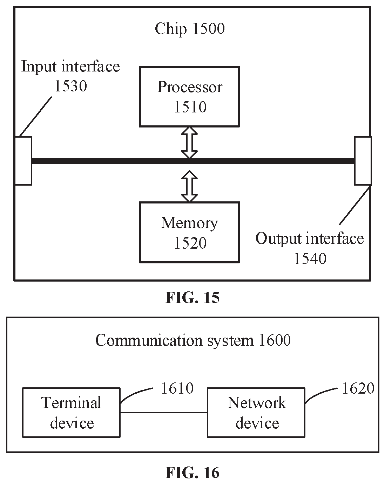

FIG. 15 is a schematic structural diagram of a chip according to an embodiment of the present disclosure. The chip 1500 shown in FIG. 15 includes a processor 1510 that can invoke and execute a computer program from a memory to implement the methods in the embodiments of the present disclosure.

Optionally, as shown in FIG. 15, the chip 1500 may further include a memory 1520. Here, the processor 1510 may invoke and execute a computer program from the memory 1520 to implement the methods in the embodiments of the present disclosure.

The memory 1520 may be a separate device independent of the processor 1510, or may be integrated into the processor 1510.

Optionally, the chip 1500 may also include an input interface 1530. Here, the processor 1510 may control the input interface 1530 to communicate with other devices or chips, and specifically, may acquire information or data sent by other devices or chips.

Optionally, the chip 1500 may also include an output interface 1540. The processor 1510 may control the output interface 1540 to communicate with other devices or chips, and specifically, may output information or data to other devices or chips.

Optionally, the chip can be applied to the network device in the embodiments of the present disclosure, and the chip can realize the corresponding flow implemented by the network device in each method of the embodiments of the present disclosure, which will not be described again here for simplicity.

Optionally, the chip can be applied to the mobile terminal/terminal device in the embodiments of the present disclosure, and the chip can realize the corresponding flow implemented by the mobile terminal/terminal device in each method of the embodiments of the present disclosure, which will not be described again here for simplicity.

It should be understood that the chip mentioned in the embodiment of the present disclosure may also be referred to as a system-level chip, a system chip, a chip system, a system-on-chip chip, or the like.

FIG. 16 is a schematic block diagram of a communication system 1600 provided by an embodiment of the present disclosure. As shown in FIG. 16, the communication system 1600 includes a terminal device 1610 and a network device 1620.

The terminal device 1610 may be used to realize the corresponding functions implemented by the terminal device in the above-described methods, and the network device 1620 may be used to realize the corresponding functions implemented by the network device in the above-described methods, which will not be described again here for simplicity.

It should be understood that the processor of the embodiments of the present disclosure may be an integrated circuit chip having signal processing capability. In the implementation process, the steps of the above-described method embodiments may be completed by hardware integrated logic circuitry in the processor or instructions in the form of software. The processor may be a general purpose processor, a digital signal processor (DSP), an application specific integrated circuit (ASIC), a field programmable gate array (FPGA) or other programmable logic device, a discrete gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as being executed by a hardware decoding processor, or may be executed by a combination of hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and completes the steps of the method in combination with its hardware.

It can be understood that the memory in the embodiments of the present disclosure may be a volatile memory or a non-volatile memory, or may include both volatile and non-volatile memories. The non-volatile memory may be a read-only memory (ROM), a programmable read-only memory (PROM), an erasable programmable read-only memory (EPROM), an electrically erasable programmable read-only memory (EPROM), or a flash memory. The volatile memory may be a random access memory (RAM), which serves as an external cache. By way of illustration, but not limitation, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous connected dynamic random access memory (SLDRAM), and direct rambus RAM (DR RAM). It should be noted that the memory of the systems and methods described herein is intended to include, but is not limited to, these and any other suitable types of memory.

It should be understood that the above-described memory is exemplary but not limiting, and for example, the memory in the embodiment of the present disclosure may also be a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchronous link dynamic random access memory (SLDRAM), a direct memory bus random access memory (Direct Rambus RAM, DR RAM), and the like. That is, the memory in embodiments of the present disclosure is intended to include, but is not limited to, these and any other suitable types of memory.

Embodiments of the present disclosure also provide a computer-readable storage medium for storing a computer program.

Optionally, the computer-readable storage medium can be applied to the network device in the embodiments of the present disclosure, and the computer program causes the computer to execute corresponding processes implemented by the network device in each method of the embodiments of the present disclosure, which will not be described again here for simplicity.

Optionally, the computer-readable storage medium can be applied to the mobile terminal/terminal device in the embodiments of the present disclosure, and the computer program causes the computer to execute corresponding processes implemented by the mobile terminal/terminal device in each method of the embodiments of the present disclosure, which will not be described again here for simplicity.

Embodiments of the present disclosure also provide a computer program product including computer program instructions.

Optionally, the computer program product can be applied to the network device in the embodiments of the present disclosure, and the computer program instructions cause the computer to execute the corresponding flow implemented by the network device in each method of the embodiments of the present disclosure, which will not be described again here for simplicity.

Optionally, the computer program product can be applied to the mobile terminal/terminal device in the embodiments of the present disclosure, and the computer program instructions cause the computer to execute the corresponding flow implemented by the mobile terminal/terminal device in each method of the embodiments of the present disclosure, which will not be described again here for simplicity.

Embodiments of the present disclosure also provide a computer program.

Optionally, the computer program can be applied to the network device in the embodiments of the present disclosure, and when the computer program is run on the computer, the computer executes the corresponding flow implemented by the network device in each method of the embodiments of the present disclosure, which will not be described again here for simplicity.

Optionally, the computer program can be applied to the mobile terminal/terminal device in the embodiments of the present disclosure, and when the computer program is run on the computer, the computer executes the corresponding flow implemented by the mobile terminal/terminal device in each method of the embodiments of the present disclosure, which will not be described again here for simplicity.

Those of ordinary skill in the art will recognize that the elements and algorithm steps of the various examples described in connection with the embodiments disclosed herein can be implemented in electronic hardware, or a combination of computer software and electronic hardware. Whether these functions are performed in hardware or software depends on the specific application and design constraints of the technical solution. The skilled artisan may implement the described functionality using different methods for each particular application, but such implementation should not be considered beyond the scope of the present disclosure.

Those skilled in the art can clearly understand that for convenience and simplicity of the description, the specific working processes of the above-described systems, devices, and units can be referred to the corresponding processes in the above-described method embodiments, and will not be described again here.

In the several embodiments provided herein, it should be understood that the disclosed systems, apparatuses, and methods may be implemented in other ways. For example, the device embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be through some interface, indirect coupling or communication connection of devices or units, may be in electrical, mechanical or other form.

The units described as separate components may or may not be physically separated, and the components shown as units may or may not be physical units, i.e. may be located in one place, or may be distributed over multiple network units. Some or all of the units may be selected according to actual needs to achieve the purpose of the solution of the present embodiment.

In addition, each functional unit in each embodiment of the present disclosure may be integrated in one processing unit, each unit may physically exist alone, or two or more units may be integrated in one unit.

The functions, if implemented in the form of software functional units and sold or used as stand-alone products, may be stored in a computer readable storage medium. Based on such an understanding, the technical solution of the present disclosure may be embodied in the form of a software product in essence or a part that contributes to the prior art or a part of the technical solution, which is stored in a storage medium and includes several instructions for causing a computer device (which may be a personal computer, a server, or a network device, etc.) to perform all or part of the steps of the method described in various embodiments of the present disclosure. The storage medium includes various media capable of storing program code, such as a USB flash drive, a mobile hard disk, a read-only memory (ROM), a random access memory (RAM), a magnetic disk or an optical disk.

The above are only specific embodiments of the present disclosure, but the protection scope of the present disclosure is not limited thereto, and any person familiar with the technical field can easily think of changes or substitutions within the technical scope disclosed in the present disclosure, which should be covered by the protection scope of the present disclosure. Therefore, the scope of protection of the present disclosure should be determined by the scope of protection of the claims.

## Claims

1. A method for wireless communication, comprising:
transmitting, by a terminal device, a physical uplink shared channel (PUSCH) scrambled with a radio network temporary identifier (RNTI),
wherein the PUSCH is used to carry an Msg3, and transmission of the Msg3 does not require an Msg1 and/or an Msg2; and
wherein the RNTI is determined based on a transmission resource for hybrid automatic repeat request (HARQ) new transmission or HARQ retransmission of the Msg3, or the RNTI is indicated by a network device.

2. The method of claim 1, wherein if the PUSCH is a first PUSCH that is the HARQ new transmission of the Msg3, the RNTI is a first RNTI determined based on a first parameter of the first PUSCH, the first parameter of the first PUSCH comprising a transmission resource of the first PUSCH.

3. The method of claim 1 or 2, wherein if the PUSCH is a second PUSCH that is the HARQ retransmission of the Msg3, the RNTI is a first RNTI determined based on a first parameter of a first PUSCH, the first parameter of the first PUSCH comprising a transmission resource of the first PUSCH, and the first PUSCH being the HARQ new transmission of the Msg3.

4. The method of claim 1 or 2, wherein if the PUSCH is a second PUSCH that is the HARQ retransmission of the Msg3, the RNTI is a second RNTI determined based on a first parameter of the second PUSCH, the first parameter of the second PUSCH comprising a transmission resource of the second PUSCH.

5. The method of any one of claims 1 to 4, wherein if the PUSCH is a second PUSCH that is the HARQ retransmission of the Msg3, the RNTI is a third RNTI indicated by the network device.

6. The method of claim 5, wherein the third RNTI is indicated through a first physical downlink control channel (PDCCH), the first PDCCH being used to respond to the HARQ new transmission of the Msg3, and the first PDCCH being used to indicate a HARQ retransmission scheduling of the Msg3.

7. The method of claim 5 or 6, wherein an manner in which the network device indicates the third RNTI comprises:
the network device indicates an absolute value of the third RNTI; or,
the network device indicates a first identifier, an RNTI corresponding to the first identifier in an RNTI list being the third RNTI.

8. The method of claim 7, wherein the RNTI list is configured by the network device via a broadcast message.

9. The method of any one of claims 5 to 8, wherein
if the network device indicates the third RNTI, the HARQ retransmission of the Msg3 is scrambled with the third RNTI;
if the network device does not indicate the third RNTI, the HARQ retransmission of the Msg3 is scrambled with a second RNTI determined based on a first parameter of the second PUSCH, the first parameter of the second PUSCH comprising a transmission resource of the second PUSCH, and the second PUSCH being used to carry the HARQ retransmission of the Msg3.

10. The method of any one of claims 2 to 4 and claim 9, wherein the first parameter comprises one or more of the following:
first information, which is used to indicate a location of a time-domain resource of a PUSCH to which the first information belongs;
second information, which is used to indicate a location of a frequency-domain resource of a PUSCH to which the second information belongs;
a first duration, which is associated with a first timer started or restarted after the terminal device transmits the Msg3;
a first number of times, which is a maximum number of retransmissions of the Msg3;
a first period, which is a time-domain resource period of the Msg3; or,
a second period, which is a transmission period of a PDCCH in response to the Msg3.

11. The method of claim 10, wherein the first duration is a maximum duration supported by the first timer, or an actual duration configured by the network device for the first timer, or a duration predefined in a protocol.

12. The method of claim 10, wherein the first number of times is a maximum number of retransmissions of the Msg3 supported by the protocol, or a maximum number of retransmissions of the Msg3 actually configured by the network device.

13. The method of claim 10, wherein the first period is a minimum period supported by a first resource, or a period of a first resource actually configured by the network device, the first resource being a semi-persistent scheduling (SPS) resource for transmitting the Msg3.

14. The method of claim 10, wherein the second period is a minimum period supported by the PDCCH in response to the Msg3, or a transmission period of the PDCCH in response to the Msg3 actually configured by the network device.

15. The method of claim 1, wherein the RNTI is a fourth RNTI configured by the network device for the terminal device according to dedicated signaling, the fourth RNTI being used for the HARQ new transmission and HARQ retransmission of the Msg3.

16. The method of any one of claims 1 to 15, wherein the RNTI is further used to scramble a second PDCCH, the second PDCCH being used to respond to the Msg3.

17. The method of claim 16, wherein the second PDCCH is used to indicate a HARQ retransmission scheduling of the Msg3 or a scheduling of a first PDSCH, the first PDSCH being used to carry an Msg4.

18. The method of any one of claims 16 to 17, wherein the second PDCCH indicates time-domain and/or frequency-domain resources used for the HARQ new transmission of the Msg3 or the HARQ retransmission of the Msg3.

19. The method of claim 18, wherein a condition under which the second PDCCH is determined to be for the terminal device comprises:
the second PDCCH is scrambled with the RNTI; and
the second PDCCH indicates the time-domain and/or frequency-domain resources used for the HARQ new transmission of the Msg3 or the HARQ retransmission of the Msg3.

20. The method of claim 17, wherein the RNTI is further used to scramble the first PDSCH.

21. The method of claim 17 or 20, wherein the first PDSCH carries a first media access control layer control unit (MAC CE), the first MAC CE being used for the terminal device to determine that contention resolution is successful.

22. The method of claim 21, wherein the first MAC CE comprises a first content that matches a common control channel service data unit (CCCH SDU) in the Msg3.

23. The method of any one of claims 16 to 22, wherein the method further comprises:
starting or restarting, by the terminal device, a first timer after transmitting the PUSCH, wherein the first timer is used to monitor the second PDCCH.

24. The method of any one of claims 1 to 23, wherein the method further comprises:
receiving, by the terminal device, first configuration information, wherein the first configuration information is used to configure a transmission resource of a first PUSCH, the first PUSCH being used to carry the HARQ new transmission of the Msg3.

25. The method of claim 24, wherein the transmission resource of the first PUSCH is an SPS resource.

26. A method for wireless communication, comprising:
receiving, by a network device, a physical uplink shared channel (PUSCH) scrambled with a radio network temporary identifier (RNTI),
wherein the PUSCH is used to carry an Msg3, and transmission of the Msg3 does not require an Msg1 and/or an Msg2; and
wherein the RNTI is determined based on a transmission resource for hybrid automatic repeat request (HARQ) new transmission or HARQ retransmission of the Msg3, or the RNTI is indicated by a network device.

27. The method of claim 26, wherein if the PUSCH is a first PUSCH that is the HARQ new transmission of the Msg3, the RNTI is a first RNTI determined based on a first parameter of the first PUSCH, the first parameter of the first PUSCH comprising a transmission resource of the first PUSCH.

28. The method of claim 26 or 27, wherein if the PUSCH is a second PUSCH that is the HARQ retransmission of the Msg3, the RNTI is a first RNTI determined based on a first parameter of a first PUSCH, the first parameter of the first PUSCH comprising a transmission resource of the first PUSCH, and the first PUSCH being the HARQ new transmission of the Msg3.

29. The method of claim 26 or 27, wherein if the PUSCH is a second PUSCH that is the HARQ retransmission of the Msg3, the RNTI is a second RNTI determined based on a first parameter of the second PUSCH, the first parameter of the second PUSCH comprising a transmission resource of the second PUSCH.

30. The method of any one of claims 26 to 29, wherein if the PUSCH is a second PUSCH that is the HARQ retransmission of the Msg3, the RNTI is a third RNTI indicated by the network device.

31. The method of claim 30, wherein the third RNTI is indicated through a first physical downlink control channel (PDCCH), the first PDCCH being used to respond to the HARQ new transmission of the Msg3, and the first PDCCH being used to indicate a HARQ retransmission scheduling of the Msg3.

32. The method of claim 30 or 31, wherein an manner in which the network device indicates the third RNTI comprises:
the network device indicates an absolute value of the third RNTI; or,
the network device indicates a first identifier, an RNTI corresponding to the first identifier in an RNTI list being the third RNTI.

33. The method of claim 32, wherein the RNTI list is configured by the network device via a broadcast message.

34. The method of any one of claims 30 to 33, wherein
if the network device indicates the third RNTI, the HARQ retransmission of the Msg3 is scrambled with the third RNTI;
if the network device does not indicate the third RNTI, the HARQ retransmission of the Msg3 is scrambled with a second RNTI determined based on a first parameter of the second PUSCH, the first parameter of the second PUSCH comprising a transmission resource of the second PUSCH, and the second PUSCH being used to carry the HARQ retransmission of the Msg3.

35. The method of any one of claims 27 to 29 and claim 34, wherein the first parameter comprises one or more of the following::
first information, which is used to indicate a location of a time-domain resource of a PUSCH to which the first information belongs;
second information, which is used to indicate a location of a frequency-domain resource of a PUSCH to which the second information belongs;
a first duration, which is associated with a first timer started or restarted after the terminal device transmits the Msg3;
a first number of times, which is a maximum number of retransmissions of the Msg3;
a first period, which is a time-domain resource period of the Msg3; or,
a second period, which is a transmission period of a PDCCH in response to the Msg3.

36. The method of claim 35, wherein the first duration is a maximum duration supported by the first timer, or an actual duration configured by the network device for the first timer, or a duration predefined in a protocol.

37. The method of claim 35, wherein the first number of times is a maximum number of retransmissions of the Msg3 supported by the protocol, or a maximum number of retransmissions of the Msg3 actually configured by the network device.

38. The method of claim 35, wherein the first period is a minimum period supported by a first resource, or a period of a first resource actually configured by the network device, the first resource being a semi-persistent scheduling (SPS) resource for transmitting the Msg3.

39. The method of claim 35, wherein the second period is a minimum period supported by the PDCCH in response to the Msg3, or a transmission period of the PDCCH in response to the Msg3 actually configured by the network device.

40. The method of claim 26, wherein the RNTI is a fourth RNTI configured by the network device for the terminal device based on dedicated signaling, the fourth RNTI being used for the HARQ new transmission and HARQ retransmission of the Msg3.

41. The method of any one of claims 26 to 40, wherein the RNTI is further used to scramble a second PDCCH, the second PDCCH being used to respond to the Msg3.

42. The method of claim 41, wherein the second PDCCH is used to indicate a HARQ retransmission scheduling of the Msg3 or a scheduling of a first PDSCH, the first PDSCH being used to carry an Msg4.

43. The method of any one of claims 41 to 42, wherein the second PDCCH indicates time-domain and/or frequency-domain resources used for the HARQ new transmission of the Msg3 or the HARQ retransmission of the Msg3.

44. The method of claim 43, wherein a condition under which the second PDCCH is determined to be for the terminal device comprises:
the second PDCCH is scrambled with the RNTI; and
the second PDCCH indicates the time-domain and/or frequency-domain resources used for the HARQ new transmission of the Msg3 or the HARQ retransmission of the Msg3.

45. The method of claim 42, wherein the RNTI is further used to scramble the first PDSCH.

46. The method of claim 42 or 45, wherein the first PDSCH carries a first media access control layer control unit (MAC CE), the first MAC CE being used for the terminal device to determine that contention resolution is successful.

47. The method of claim 46, wherein the first MAC CE comprises a first content that matches a common control channel service data unit (CCCH SDU) in the Msg3.

48. The method of any one of claims 26 to 47, wherein the method further comprises:
transmitting, by the network device, first configuration information, wherein the first configuration information is used to configure a transmission resource of a first PUSCH, the first PUSCH being used to carry the HARQ new transmission of the Msg3.

49. The method of claim 48, wherein the transmission resource of the first PUSCH is an SPS resource.

50. A terminal device, comprising:
a first communication unit, configured to transmit a physical uplink shared channel (PUSCH) scrambled with a radio network temporary identifier (RNTI),
wherein the PUSCH is used to carry an Msg3, and transmission of the Msg3 does not require an Msg1 and/or an Msg2; and
wherein the RNTI is determined based on a transmission resource for hybrid automatic repeat request (HARQ) new transmission or HARQ retransmission of the Msg3, or the RNTI is indicated by a network device.

51. A network device, comprising:
a second communication unit, configured to receive a physical uplink shared channel (PUSCH) scrambled with a radio network temporary identifier (RNTI),
wherein the PUSCH is used to carry an Msg3, and transmission of the Msg3 does not require an Msg1 and/or an Msg2; and
wherein the RNTI is determined based on a transmission resource for hybrid automatic repeat request (HARQ) new transmission or HARQ retransmission of the Msg3, or the RNTI is indicated by a network device.

52. A terminal device, comprising:
a processor; and
a memory for storing a computer program,
wherein the processor is used to invoke and execute the computer program stored in the memory, to perform the method of any one of claims 1 to 25.

53. A network device, comprising:
a processor; and
a memory for storing a computer program,
wherein the processor is used to invoke and execute the computer program stored in the memory, to perform the method of any one of claims 26 to 49.

54. A chip, comprising: a processor for invoking and executing a computer program from a memory such that a device on which the chip is mounted performs the method of any one of claims 1 to 25, or performs the method of any one of claims 26 to 49.

55. A computer-readable storage medium for storing a computer program that, when executed by a computer, causes the computer to perform the method of any one of claims 1 to 25, or perform the method of any one of claims 26 to 49.

56. A computer program product comprising computer program instructions whose execution causes a computer to perform the method of any one of claims 1 to 25, or perform the method of any one of claims 26 to 49.

57. A computer program whose operation causes a computer to perform the method of any one of claims 1 to 25, or perform the method of any one of claims 26 to 49.
